(19) Europäisches Patentamt
European Patent Office
Office européen des brevets

(11) **EP 4 637 235 A1**

(12) **EUROPEAN PATENT APPLICATION**
published in accordance with Art. 153(4) EPC

(43) Date of publication:
**22.10.2025 Bulletin 2025/43**

(21) Application number: **23922465.2**

(22) Date of filing: **07.12.2023**

(51) International Patent Classification (IPC):
**H04W 72/04** (2023.01)

(52) Cooperative Patent Classification (CPC):
**H04L 1/1812; H04L 5/00; H04W 72/04;
H04W 72/12; H04W 72/1268**

(86) International application number:
**PCT/CN2023/136978**

(87) International publication number:
**WO 2024/169349 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.02.2023 CN 202310152005**

(71) Applicant: **Huawei Technologies Co., Ltd.
Shenzhen, Guangdong 518129 (CN)**

(72) Inventors:
• **XU, Rui
Shenzhen, Guangdong 518129 (CN)**

• **CHEN, Erkai
Shenzhen, Guangdong 518129 (CN)**
• **QIN, Yi
Shenzhen, Guangdong 518129 (CN)**
• **CAO, Youlong
Shenzhen, Guangdong 518129 (CN)**
• **PANG, Xu
Shenzhen, Guangdong 518129 (CN)**
• **MI, Xiang
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **DATA TRANSMISSION METHOD AND RELATED DEVICE**

(57) A data transmission method and a related device are provided. The method includes: A terminal device determines a HARQ process, and sends indication information to a network device on a first CG transmission occasion in a first time period, where an identifier of the HARQ process is related to a number of CG transmission occasions used or skipped in the first time period and an index of a second CG transmission occasion in a second time period. Alternatively, a network device may determine a HARQ process based on a number that is of CG transmission occasions used or skipped in a first time period and that is indicated by indication information, so that a terminal device can send uplink data to the network device on a second CG transmission occasion based on the HARQ process. Different HARQ processes between a plurality of transmission occasions are determined on a licensed frequency band, so that the plurality of transmission occasions can be configured, to complete uplink transmission of service data that has a large data amount and dynamically changes.

FIG. 8

**Description**

This application claims priority to Chinese Patent Application No. 202310152005.5, filed with the China National Intellectual Property Administration on February 15, 2023 and entitled "DATA TRANSMISSION METHOD AND RELATED DEVICE", which is incorporated herein by reference in its entirety.

**TECHNICAL FIELD**

Embodiments of this application relate to the communication field, and in particular, to a data transmission method and a related device.

**BACKGROUND**

With continuous development of a 5th generation mobile communication system (5th generation mobile communication technology, 5G) technology, a data transmission delay is continuously reduced, and a transmission capacity is increasingly large.

A configured grant (configured grant, CG) is suitable for uplink periodic service transmission in 5G communication. The CG means that in an uplink transmission process, a time-frequency resource needs to be allocated only once for uplink scheduling resources, and then the same time-frequency resource may be periodically and repeatedly used for uplink transmission. To support a service that has a large data amount and dynamically changes, a plurality of physical uplink shared channel (physical uplink shared channel, PUSCH) transmission occasions may be configured in a CG periodicity time period. An asynchronous hybrid automatic repeat request (hybrid automatic repeat request, HARQ) mechanism is used for an uplink. One PUSCH corresponds to one hybrid automatic repeat request process identifier (HARQ process ID), used to schedule a terminal device to perform retransmission when a transmission error occurs.

However, HARQ process IDs of a plurality of PUSCHs determined on a licensed frequency band may be the same. When a transmission error occurs, data that needs to be retransmitted cannot be accurately determined based on the HARQ process ID. Therefore, only one PUSCH transmission occasion can be configured in one CG periodicity time period, and uplink transmission of service data that has a large data amount and dynamically changes cannot be completed.

**SUMMARY**

Embodiments of this application provide a data transmission method, to complete, in a configured grant, uplink transmission of service data that has a large data amount and dynamically changes. Embodiments of this application further provide a corresponding communication apparatus, a computer-readable storage medium, a computer program product, and the like.

According to a first aspect, this application provides a data transmission method. The method includes: determining a first hybrid automatic repeat request HARQ process, where an identifier of the first HARQ process is related to a number of configured grant CG transmission occasions used or skipped in a first time period and an index of a second CG transmission occasion in a second time period; sending first indication information on a first CG transmission occasion in the first time period, where the first indication information indicates the number of CG transmission occasions used or skipped in the first time period; and sending uplink data on the second CG transmission occasion based on the first HARQ process.

The data transmission method may be performed by a terminal device, or may be performed by a module (for example, a processor, a chip, or a chip system) used in the terminal device, or may be implemented by a logical node, a logical module, or software that can implement all or some functions of the terminal device.

This application may be applied to a plurality of scenarios. In this application, an application scenario in which the terminal device sends the uplink data to a network device is used as an example for description. In the application scenario, an asynchronous hybrid automatic repeat request (hybrid automatic repeat request, HARQ) mechanism is used for an uplink of a new radio (new radio, NR) technology of the 3rd generation partnership project (3rd generation partnership project, 3GPP). One physical uplink shared channel (physical uplink shared channel, PUSCH), which may also be understood as one transmission occasion, corresponds to one HARQ process identifier (HARQ process ID), which is used to uniquely specify one HARQ process (HARQ process). When a receiving error occurs, the network device may schedule, based on the HARQ process ID, the terminal device to perform PUSCH retransmission.

In this application, there is an independent HARQ buffer (buffer) on a receive side for the HARQ process. HARQ process IDs for initial transmission and retransmission are the same, for soft combination on received data. For a service that has a large data amount and dynamically changes, a plurality of PUSCH transmission occasions need to be configured in one CG periodicity time period. On a licensed frequency band, when a plurality of PUSCHs are configured in one CG periodicity time period, how to determine a HARQ process ID is a problem. If the method for determining the HARQ process ID based on the licensed frequency band is used, HARQ process IDs of adjacent PUSCHs determined in one CG periodicity time period may be the same. The network device cannot accurately determine, based on the HARQ process ID, data that needs to be retransmitted, resulting in a retransmission error. Consequently, this is not conducive to scheduling retransmission by the network device, and increases processing difficulty for the network device.

In this application, the terminal device first determines the first indication information, and then may determine, based on the first indication information, the identifier of the first HARQ process, that is, a HARQ process ID of the first HARQ process, to determine the first HARQ process. The terminal device further reports the first indication information to the network device, where the first indication information may be carried in uplink control information (uplink control information, UCI).

The first indication information in this application indicates the number of CG transmission occasions used or skipped in the first time period, and may be represented in a plurality of forms. In addition, there are a plurality of methods for determining the HARQ process ID based on the first indication information.

In this application, the first CG transmission occasion is a PUSCH transmission occasion in the first time period (where the first time period may include a plurality of transmission occasions), the second CG transmission occasion is a PUSCH transmission occasion in the second time period (where the second time period may include a plurality of transmission occasions), and the second time period is a time period after the first time period. In addition, the first time period may be a CG periodicity time period, and the second time period is a CG periodicity time period after the first time period, where duration of one CG periodicity time period is equal to a CG periodicity. The first time period and the second time period may alternatively be time periods in a same CG periodicity time period.

According to the first aspect, the terminal device determines the HARQ process, and sends the indication information to the network device on the first CG transmission occasion in the first time period, where the identifier of the HARQ process is related to the number of CG transmission occasions used or skipped in the first time period and the index of the second CG transmission occasion in the second time period. Alternatively, the network device may determine the HARQ process based on the number that is of CG transmission occasions used or skipped in the first time period and that is indicated by the indication information, so that the terminal device can send the uplink data to the network device on the second CG transmission occasion based on the HARQ process. Different HARQ processes between a plurality of transmission occasions are determined on the licensed frequency band, so that the plurality of transmission occasions can be configured, to complete uplink transmission of service data that has a large data amount and dynamically changes.

In a possible implementation of the first aspect, the identifier of the first HARQ process is further related to a total number of CG transmission occasions in the first time period.

In this possible implementation, the identifier of the first HARQ process may be determined in a plurality of manners. This improves implementability of the solution.

In a possible implementation of the first aspect, the identifier of the first HARQ process is further related to an index of the first CG transmission occasion.

In this possible implementation, the identifier of the first HARQ process is further related to the index i of the first CG transmission occasion. In other words, there is no limitation that the UCI is sent on a $1^{st}$ PUSCH in the CG periodicity time period. To be specific, the UCI may be sent on the $1^{st}$ PUSCH, or may be sent on an $i^{th}$ PUSCH, where i is less than or equal to a total number of configured PUSCHs, and i is configurable. This improves applicability of the solution.

In a possible implementation of the first aspect, the number of CG transmission occasions used in the first time period is equal to the total number of CG transmission occasions in the first time period, or the number of CG transmission occasions skipped in the first time period is equal to zero.

In this possible implementation, to resolve a problem that a HARQ process ID determined by the terminal device is not synchronized with a HARQ process ID determined by the network device because transmission of the UCI or a PUSCH reused for the UCI is not completed, after receiving the UCI sent by the terminal device, the network device feeds back 1 bit to represent whether the reception is correct. If information fed back by the network device is (initial transmission is correct or retransmission is correct), the terminal device and the network device perform determining according to a method for determining the HARQ process ID provided in this application. If transmission is incorrect in the current periodicity time period, the terminal device and the network device perform determining according to another default method. In the default method, the terminal device and the network device consider that no CG PUSCH is skipped. In other words, the number of CG transmission occasions used in the first time period is equal to the total number of CG transmission occasions in the first time period, or the number of CG transmission occasions skipped in the first time period is equal to zero. This avoids a problem that HARQ process IDs determined by the network device and the terminal device do not match due to a data transmission error, and improves fault tolerance of data transmission.

In a possible implementation of the first aspect, a bitwidth of the first indication information is related to the index of the first CG transmission occasion.

In this possible implementation, the bitwidth of the first indication information is related to the index i of the first CG transmission occasion. This improves implementability of the solution.

In a possible implementation of the first aspect, the first indication information further indicates a HARQ process corresponding to a last CG transmission occasion used in the first time period or a HARQ process corresponding to a $1^{st}$ available CG transmission occasion in the second time period.

In this possible implementation, the first indication information has a plurality of representation forms, that is, the identifier of the first HARQ process may be determined in a plurality of manners, and the plurality of manners are combined for use. This improves implementability of the solution.

According to a second aspect, this application provides a data transmission method. The method includes: determining a second HARQ process, where an identifier of the second HARQ process is related to an identifier of a HARQ process corresponding to a last CG transmission occasion used in a third time period or an identifier of a HARQ process corresponding to a $1^{st}$ available CG transmission occasion in a fourth time period, and an index of a fourth CG transmission occasion in the fourth time period; sending second indication information on a third CG transmission occasion in the third time period, where the second indication information indicates the HARQ process corresponding to the last CG transmission occasion used in the third time period or the HARQ process corresponding to the $1^{st}$ available CG transmission occasion in the fourth time period; and sending uplink data on the fourth CG transmission occasion based on the second HARQ process.

The data transmission method may be performed by a terminal device, or may be performed by a module (for example, a processor, a chip, or a chip system) used in the terminal device, or may be implemented by a logical node, a logical module, or software that can implement all or some functions of the terminal device.

In this application, the terminal device first determines the second indication information, and then may determine, based on the second indication information, the identifier of the second HARQ process, that is, a HARQ process ID of the second HARQ process, to determine the second HARQ process. The terminal device further reports the second indication information to the network device, where the second indication information may be carried in uplink control information (uplink control information, UCI).

The second indication information in this application indicates the number of CG transmission occasions used or skipped in the third time period, and may be represented in a plurality of forms. In addition, there are a plurality of methods for determining the HARQ process ID based on the second indication information.

In this application, the third CG transmission occasion is a PUSCH transmission occasion in the third time period (where the third time period may include a plurality of transmission occasions), the fourth CG transmission occasion is a PUSCH transmission occasion in the fourth time period (where the fourth time period may include a plurality of transmission occasions), and the fourth time period is a time period after the third time period. In addition, the third time period may be a CG periodicity time period, and the fourth time period is a CG periodicity time period after the third time period, where duration of one CG periodicity time period is equal to a CG periodicity. The third time period and the fourth time period may alternatively be time periods in a same CG periodicity time period.

According to the second aspect, the terminal device determines the HARQ process, and sends the indication information to the network device on the third CG transmission occasion in the third time period, where the identifier of the HARQ process is related to the identifier of the HARQ process corresponding to the last CG transmission occasion used in the third time period or the identifier of the HARQ process corresponding to the $1^{st}$ available CG transmission occasion in the fourth time period, and the index of the fourth CG transmission occasion in the fourth time period. Alternatively, the network device may determine the HARQ process based on the HARQ process corresponding to the last CG transmission occasion used in the third time period or the HARQ process corresponding to the $1^{st}$ available CG transmission occasion in the fourth time period that is indicated by the indication information, so that the terminal device can send the uplink data to the network device on the fourth CG transmission occasion based on the HARQ process. Different HARQ processes between a plurality of transmission occasions are determined on a licensed frequency band, so that the plurality of transmission occasions can be configured, to complete uplink transmission of service data that has a large data amount and dynamically changes.

In a possible implementation of the second aspect, the identifier of the second HARQ process is further related to a total number of CG transmission occasions in the third time period.

In this possible implementation, the identifier of the second HARQ process may be determined in a plurality of manners. This improves implementability of the solution.

In a possible implementation of the second aspect, the identifier of the second HARQ process is further related to an index of the third CG transmission occasion.

In this possible implementation, the identifier of the second HARQ process is further related to the index i of the third CG transmission occasion. In other words, there is no limitation that the UCI is sent on a $1^{st}$ PUSCH in the CG periodicity time period. To be specific, the UCI may be sent on the $1^{st}$ PUSCH, or may be sent on an $i^{th}$ PUSCH, where i is less than or equal to a total number of configured PUSCHs, and i is configurable. This improves applicability of the solution.

In a possible implementation of the second aspect, the second indication information further indicates a number of CG transmission occasions used or skipped in the third time period.

In this possible implementation, the second indication information has a plurality of representation forms, that is, the identifier of the second HARQ process may be determined in a plurality of manners, and the plurality of manners are combined for use. This improves implementability of the solution.

In a possible implementation of the second aspect, the number of CG transmission occasions used in the third time period is equal to the total number of CG transmission occasions in the third time period, or the number of CG transmission occasions skipped in the third time period is equal to zero.

In this possible implementation, if information fed back by the network device is (initial transmission is correct or retransmission is correct), the terminal device and the network device perform determining according to a method for determining the HARQ process ID provided in this application. If transmission is incorrect in the current periodicity time period, the terminal device and the network device perform determining according to another default method. In the default method, the terminal device and the network device consider that no CG PUSCH is skipped. In other words, the number of CG transmission occasions used in the third time period is equal to the total number of CG transmission occasions in the third time period, or the number of CG transmission occasions skipped in the third time period is equal to zero. This avoids a problem that HARQ process IDs determined by the network device and the terminal device do not match due to a data transmission error, and improves fault tolerance of data transmission.

According to a third aspect, this application provides a data transmission method. The method includes: receiving first indication information on a first CG transmission occasion in a first time period, where the first indication information indicates a number of CG transmission occasions used or skipped in the first time period; determining a first HARQ process, where an identifier of the first HARQ process is related to the number of configured grant CG transmission occasions used or skipped in the first time period and an index of a second CG transmission occasion in a second time period; and receiving uplink data on the second CG transmission occasion based on the first HARQ process.

The data transmission method may be performed by a network device, or may be performed by a module (for example, a processor, a chip, or a chip system) used in the network device, or may be implemented by a logical node, a logical module, or software that can implement all or some functions of the network device.

In a possible implementation of the third aspect, the identifier of the first HARQ process is further related to a total number of CG transmission occasions in the first time period.

In a possible implementation of the third aspect, the identifier of the first HARQ process is further related to an index of the first CG transmission occasion.

In a possible implementation of the third aspect, the number of CG transmission occasions used in the first time period is equal to the total number of CG transmission occasions in the first time period, or the number of CG transmission occasions skipped in the first time period is equal to zero.

In a possible implementation of the third aspect, a bitwidth of the first indication information is related to the index of the first CG transmission occasion.

In a possible implementation of the third aspect, the first indication information further indicates a HARQ process corresponding to a last CG transmission occasion used in the first time period or a HARQ process corresponding to a 1st available CG transmission occasion in the second time period.

According to a fourth aspect, this application provides a data transmission method. The method includes: receiving second indication information on a third CG transmission occasion in a third time period, where the second indication information indicates a HARQ process corresponding to a last CG transmission occasion used in the third time period or a HARQ process corresponding to a 1st available CG transmission occasion in a fourth time period; determining a second HARQ process, where an identifier of the second HARQ process is related to an identifier of the HARQ process corresponding to the last CG transmission occasion used in the third time period or an identifier of the HARQ process corresponding to the 1st available CG transmission occasion in the fourth time period, and an index of a fourth CG transmission occasion in the fourth time period; and receiving uplink data on the fourth CG transmission occasion based on the second HARQ process.

The data transmission method may be performed by a network device, or may be performed by a module (for example, a processor, a chip, or a chip system) used in the network device, or may be implemented by a logical node, a logical module, or software that can implement all or some functions of the network device.

In a possible implementation of the fourth aspect, the identifier of the second HARQ process is further related to a total number of CG transmission occasions in the third time period.

In a possible implementation of the fourth aspect, the identifier of the second HARQ process is further related to an index of the third CG transmission occasion.

In a possible implementation of the fourth aspect, the second indication information further indicates a number of CG transmission occasions used or skipped in the third time period.

In a possible implementation of the fourth aspect, the number of CG transmission occasions used in the third time period is equal to the total number of CG transmission occasions in the third time period, or the number of CG transmission occasions skipped in the third time period is equal to zero.

According to a fifth aspect, this application provides a communication apparatus. The communication apparatus includes: a processing unit, configured to determine a first hybrid automatic repeat request HARQ process, where an identifier of the first HARQ process is related to a number of configured grant CG transmission occasions used or skipped in a first time period and an index of a second CG transmission occasion in a second time period; and an interface unit, configured to send first indication information on a first CG transmission occasion in the first time period, where the first indication information indicates the number of CG transmission occasions used or skipped in the first time period; and the interface unit is further configured to send uplink data on the second CG transmission occasion based on the first HARQ process.

In a possible implementation of the fifth aspect, the identifier of the first HARQ process is further related to a total number of CG transmission occasions in the first time period.

In a possible implementation of the fifth aspect, the identifier of the first HARQ process is further related to an index of the first CG transmission occasion.

In a possible implementation of the fifth aspect, the number of CG transmission occasions used in the first time period is equal to the total number of CG transmission occasions in the first time period, or the number of CG transmission occasions skipped in the first time period is equal to zero.

In a possible implementation of the fifth aspect, a bitwidth of the first indication information is related to the index of the first CG transmission occasion.

In a possible implementation of the fifth aspect, the first indication information further indicates a HARQ process corresponding to a last CG transmission occasion used in the first time period or a HARQ process corresponding to a $1^{st}$ available CG transmission occasion in the second time period.

According to a sixth aspect, this application provides a communication apparatus. The communication apparatus includes: a processing unit, configured to determine a second HARQ process, where an identifier of the second HARQ process is related to an identifier of a HARQ process corresponding to a last CG transmission occasion used in a third time period or an identifier of a HARQ process corresponding to a $1^{st}$ available CG transmission occasion in a fourth time period, and an index of a fourth CG transmission occasion in the fourth time period; and an interface unit, configured to send second indication information on a third CG transmission occasion in the third time period, where the second indication information indicates the HARQ process corresponding to the last CG transmission occasion used in the third time period or the HARQ process corresponding to the $1^{st}$ available CG transmission occasion in the fourth time period; and the interface unit is further configured to send uplink data on the fourth CG transmission occasion based on the second HARQ process.

In a possible implementation of the sixth aspect, the identifier of the second HARQ process is further related to a total number of CG transmission occasions in the third time period.

In a possible implementation of the sixth aspect, the identifier of the second HARQ process is further related to an index of the third CG transmission occasion.

In a possible implementation of the sixth aspect, the second indication information further indicates a number of CG transmission occasions used or skipped in the third time period.

In a possible implementation of the sixth aspect, the number of CG transmission occasions used in the third time period is equal to the total number of CG transmission occasions in the third time period, or the number of CG transmission occasions skipped in the third time period is equal to zero.

According to a seventh aspect, this application provides a communication apparatus. The communication apparatus includes: an interface unit, configured to receive first indication information on a first CG transmission occasion in a first time period, where the first indication information indicates a number of CG transmission occasions used or skipped in the first time period; and a processing unit, configured to determine a first HARQ process, where an identifier of the first HARQ process is related to the number of configured grant CG transmission occasions used or skipped in the first time period and an index of a second CG transmission occasion in a second time period; and the interface unit is further configured to receive uplink data on the second CG transmission occasion based on the first HARQ process.

In a possible implementation of the seventh aspect, the identifier of the first HARQ process is further related to a total number of CG transmission occasions in the first time period.

In a possible implementation of the seventh aspect, the identifier of the first HARQ process is further related to an index of the first CG transmission occasion.

In a possible implementation of the seventh aspect, the number of CG transmission occasions used in the first time period is equal to the total number of CG transmission occasions in the first time period, or the number of CG transmission occasions skipped in the first time period is equal to zero.

In a possible implementation of the seventh aspect, a bitwidth of the first indication information is related to the index of the first CG transmission occasion.

In a possible implementation of the seventh aspect, the first indication information further indicates a HARQ process corresponding to a last CG transmission occasion used in the first time period or a HARQ process corresponding to a $1^{st}$ available CG transmission occasion in the second time period.

According to an eighth aspect, this application provides a communication apparatus. The communication apparatus includes: an interface unit, configured to receive second indication information on a third CG transmission occasion in a third time period, where the second indication information indicates a HARQ process corresponding to a last CG transmission occasion used in the third time period or a HARQ process corresponding to a $1^{st}$ available CG transmission occasion in a fourth time period; and a processing unit, configured to determine a second HARQ process, where an identifier of the second HARQ process is related to an identifier of the HARQ process corresponding to the last CG transmission occasion used in the third time period or an identifier of the HARQ process corresponding to the $1^{st}$ available CG transmission occasion in the fourth time period, and an index of a fourth CG transmission occasion in the fourth time period; and the interface unit is further configured to receive uplink data on the fourth CG transmission occasion based on the second HARQ process.

In a possible implementation of the eighth aspect, the identifier of the second HARQ process is further related to a total number of CG transmission occasions in the third time period.

In a possible implementation of the eighth aspect, the identifier of the second HARQ process is further related to an index of the third CG transmission occasion.

In a possible implementation of the eighth aspect, the second indication information further indicates a number of CG transmission occasions used or skipped in the third time period.

In a possible implementation of the eighth aspect, the number of CG transmission occasions used in the third time period is equal to the total number of CG transmission occasions in the third time period, or the number of CG transmission occasions skipped in the third time period is equal to zero.

According to a ninth aspect, this application provides a communication apparatus. The communication apparatus includes a processor. The processor is coupled to a memory. The memory is configured to store a program or instructions. When the program or the instructions are executed by the processor, the communication apparatus is enabled to perform the method in the first aspect or any one of the possible implementations of the first aspect, or perform the method in the third aspect or any one of the possible implementations of the third aspect.

According to a tenth aspect, this application provides a communication apparatus. The communication apparatus includes a processor. The processor is coupled to a memory. The memory is configured to store a program or instructions. When the program or the instructions are executed by the processor, the communication apparatus is enabled to perform the method in the second aspect or any one of the possible implementations of the second aspect, or perform the method in the fourth aspect or any one of the possible implementations of the fourth aspect.

According to an eleventh aspect, this application provides a computer-readable storage medium storing one or more computer-executable instructions. When the computer-executable instructions are executed by a processor, the processor performs the method in the first aspect or any one of the possible implementations of the first aspect, or performs the method in the third aspect or any one of the possible implementations of the third aspect.

According to a twelfth aspect, this application provides a computer-readable storage medium storing one or more computer-executable instructions. When the computer-executable instructions are executed by a processor, the processor performs the method in the second aspect or any one of the possible implementations of the second aspect, or performs the method in the fourth aspect or any one of the possible implementations of the fourth aspect.

According to a thirteenth aspect, this application provides a computer program product storing one or more computer-executable instructions. When the computer-executable instructions are executed by a processor, the processor performs the method in the first aspect or any one of the possible implementations of the first aspect, or performs the method in the third aspect or any one of the possible implementations of the third aspect.

According to a fourteenth aspect, this application provides a computer program product storing one or more computer-executable instructions. When the computer-executable instructions are executed by a processor, the processor performs the method in the second aspect or any one of the possible implementations of the second aspect, or performs the method in the fourth aspect or any one of the possible implementations of the fourth aspect.

According to a fifteenth aspect, this application provides a chip system. The chip system includes at least one processor and an interface. The interface is configured to receive data and/or a signal. The at least one processor is configured to support a computer device in implementing the function in the first aspect or any one of the possible implementations of the first aspect, or in the third aspect or any one of the possible implementations of the third aspect. In a possible design, the chip system further includes a memory. The memory is configured to store program instructions and data that are necessary for the computer device. The chip system may include a chip, or may include a chip and another discrete component.

According to a sixteenth aspect, this application provides a chip system. The chip system includes at least one processor and an interface. The interface is configured to receive data and/or a signal. The at least one processor is configured to support a computer device in implementing the function in the second aspect or any one of the possible implementations of the second aspect, or in the fourth aspect or any one of the possible implementations of the fourth aspect. In a possible design, the chip system further includes a memory. The memory is configured to store program instructions and data that are necessary for the computer device. The chip system may include a chip, or may include a chip and another discrete component.

In embodiments of this application, a terminal device determines a HARQ process, and sends indication information to a network device on a first CG transmission occasion in a first time period, where an identifier of the HARQ process is related to a number of CG transmission occasions used or skipped in the first time period and an index of a second CG transmission occasion in a second time period. Alternatively, a network device may determine a HARQ process based on a number that is of CG transmission occasions used or skipped in a first time period and that is indicated by indication information, so that a terminal device can send uplink data to the network device on a second CG transmission occasion based on the HARQ process. Different HARQ processes between a plurality of transmission occasions are determined on a licensed frequency band, so that the plurality of transmission occasions can be configured, to complete uplink transmission of service data that has a large data amount and dynamically changes.

## BRIEF DESCRIPTION OF DRAWINGS

FIG. 1 is a diagram of picture frame transmission of an XR service;
FIG. 2 is a diagram of a CG;
FIG. 3 is a diagram of a method for determining a HARQ process ID;
FIG. 4 is another diagram of a CG;
FIG. 5 is a diagram of a value of a HARQ process ID in a CG periodicity time period;
FIG. 6 and FIG. 7 each are a diagram of an architecture of a communication system;
FIG. 8 is a diagram of an embodiment of a data transmission method according to an embodiment of this application;
FIG. 9 is a diagram of reporting UCI according to an embodiment of this application;
FIG. 10 is a diagram of determining a HARQ process ID according to an embodiment of this application;
FIG. 11 is a diagram of another embodiment of a data transmission method according to an embodiment of this application;
FIG. 12 is a diagram of another embodiment of a data transmission method according to an embodiment of this application;
FIG. 13 is a diagram of determining second indication information according to an embodiment of this application;
FIG. 14 to FIG. 17 each are a diagram of an embodiment of a communication apparatus according to an embodiment of this application; and
FIG. 18 and FIG. 19 each are a diagram of another embodiment of a communication apparatus according to an embodiment of this application.

## DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

The specific term "example" herein means "used as an example, embodiment, or illustration". Any embodiment described as "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

The following uses an example to describe an application scenario related to embodiments of this application.

In recent years, with continuous development of a 5th generation mobile communication system (5th generation mobile communication technology, 5G), a data transmission delay is continuously reduced, and a transmission capacity is increasingly large. The 5G communication system is gradually introduced into some multimedia services with a high real-time performance requirement and a high data capacity requirement, such as video transmission, cloud gaming, and extended reality (extended reality, XR), where the XR includes virtual reality (virtual reality, VR) and augmented reality (augmented reality, AR).

With a rapid increase of a communication transmission rate, a real-time video transmission service has gradually become one of core services in a current network. With continuous progress and improvement of extended reality technologies, related industries have developed vigorously. Nowadays, as a kind of XR, a VR technology has entered various fields closely related to production and life of people. Compared with a conventional video service, VR has multiple viewing angles, strong interaction, and other advantages, providing a user with new visual experience. In addition to smartphones, people increasingly expect to improve XR experience through terminal devices such as a head mounted display (head mounted display, HMD) or smart glasses (such as VR glasses and AR glasses). Unlike smartphones, head mounted displays and smart glasses require more consideration of power consumption. The smart glasses, in particular, are very small in size, similar to prescription glasses, and are expected to be worn for long time, with significantly higher power consumption control than the smartphones. In the cloud gaming, the terminal device may be a smartphone or a tablet computer. For long-time cloud gaming experience, power consumption and a battery life of the device also need to be significantly considered. Therefore, as the XR device becomes increasingly lightweight, on a basis of ensuring user experience, power consumption of the device has become a key issue in current research.

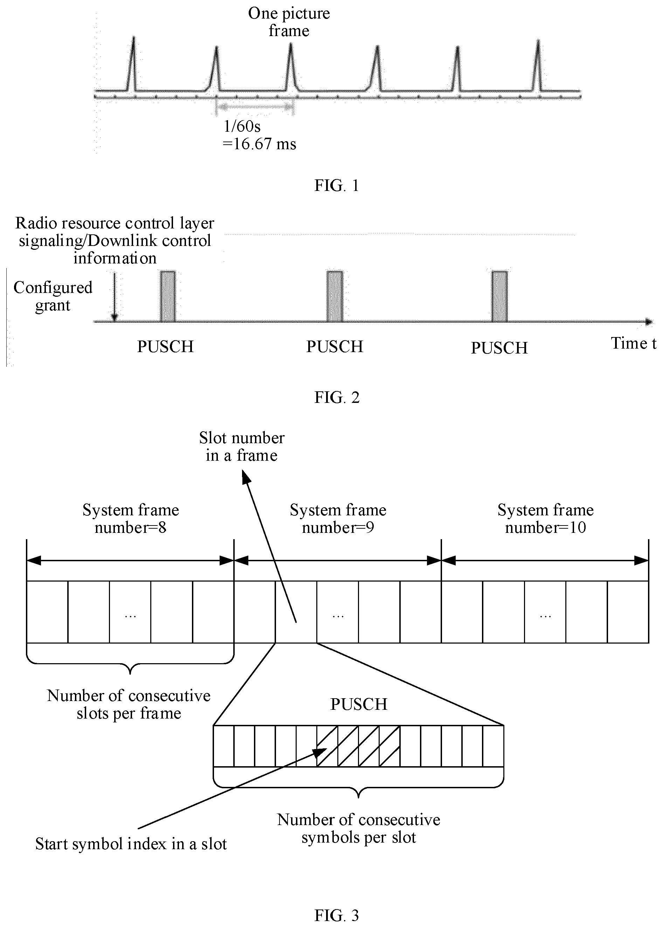

Service models of an XR transmission service and a video transmission service are usually periodically arrived based on frame rates. As shown in FIG. 1, for a video with a frame rate of 60 frames per second (frames per second, FPS), in an ideal case, one picture frame arrives every 16.67 milliseconds. A data amount of the XR transmission service and a data amount of the video transmission service are usually large. For example, a size of a 4K video frame is about 30 to 100 kilobytes (kilobytes, KB). In addition, sizes of different video frames usually vary. Because compression rates and frame types of the different video frames are different, sizes of the different video frames vary significantly. Different XR services usually have different uplink and downlink service models. A change in scenario content display in VR is caused by a posture or a location (action). Location and posture information are mainly uploaded in VR, and a data amount is small and is usually only dozens of kilobits per second (kilobits per second, kbps). Downlink transmission is mainly for a rendered video stream, and a data amount is large and may reach dozens to hundreds of megabits per second (megabits per second, Mbps). Different from that in VR, a change in scenario content display in AR is caused by a change in a fixation focus target and a change in a spatial relationship (action) between a location and a fixation point. Visual information (including a depth) required for perception is uploaded in AR. Therefore, uplink transmission is mainly for a clear and stable picture or video stream with a large data amount, or may be for some extracted environment feature information. According to industry research and evaluation, for an interactive AR service, a network uplink rate is required to be about 2 Mbps to meet initial experience, and the network uplink rate is required to range from 10 Mbps to 20 Mbps to meet advanced experience. Compared with VR, AR has a higher requirement on an uplink transmission rate, making uplink transmission more challenging.

As shown in FIG. 2, a configured grant (configured grant, CG) is suitable for uplink periodic service transmission of an XR service. The CG means that, in an uplink transmission process, for uplink scheduling resources, a time-frequency resource needs to be allocated only once by using radio resource control (radio resource control, RRC) layer signaling or downlink control information (downlink control information, DCI), and then the same time-frequency resource may be periodically and repeatedly used for uplink transmission. There are two types of CGs. In a type 1, a related parameter of CG transmission, for example, a CG periodicity, a CG time domain resource, or a CG frequency domain resource, is configured by using RRC, and a corresponding CG resource is activated by using the RRC signaling. In a type 2, a related parameter of CG transmission, for example, a CG periodicity, is configured by using RRC, and a corresponding CG resource is configured and activated by using DCI.

An asynchronous hybrid automatic repeat request (hybrid automatic repeat request, HARQ) mechanism is used for an uplink of a new radio (new radio, NR) technology of the 3rd generation partnership project (3rd generation partnership project, 3GPP). One physical uplink shared channel (physical uplink shared channel, PUSCH) corresponds to one HARQ process number (HARQ process number), which is also referred to as one HARQ process identifier (HARQ process ID) and is used to uniquely specify one HARQ process (HARQ process). When a receiving error occurs, a network device (for example, a base station) may schedule, based on the HARQ process ID, a terminal device to perform PUSCH retransmission. There is an independent HARQ buffer (buffer) on a receive side for the HARQ process. HARQ process IDs for initial transmission and retransmission need to be the same, for soft combination on received data. On a licensed frequency band (a frequency band authorized by a protocol), a CG PUSCH is usually used only for initial transmission. When one PUSCH is configured in one CG periodicity time period, HARQ-related information is configured by the network device by using RRC. The terminal device determines, based on a system frame number (system frame number, SFN) of the PUSCH, a slot number in a frame, and a start symbol index in a slot, that, as shown in FIG. 3, a HARQ process ID meets the following:

HARQ Process ID = [floor(CURRENTsymbol/periodicity)] modulo nrofHARQ-Processes

*floor* represents rounding down, *modulo* represents a modulo operation, *nrofHARQ-Processes* represents a number of HARQ process IDs that can be used in the CG, which is applicable to both type 1 and type 2 CGs, and *periodicity* represents a CG periodicity.

$CURRENT_{symbol}$ = (numberOfSlotsPerFrame $\times$ numberOfSymbolsPerSlot +slot number in the frame $\times$ numberOfSymbolsPerSlot + symbol number in the slot)

SFN represents the system frame number, numberOfSlotsPerFrame represents a number of consecutive slots per frame, numberOfSymbolsPerSlot represents a number of consecutive symbols per slot, slot number in the frame represents the slot number in the frame, and symbol number in the slot represents the start symbol index in the slot.

In addition, the network device may further configure a start offset *harq-ProcID-Offset2* of a HARQ process ID for the CG. In this case, the terminal device determines that the HARQ process ID of the PUSCH meets the following:

$HARQ\ Process\ ID = [floor(CURRENT_{symbol}/periodicity)]\ modulo\ nrofHARQ\text{-}Processes + harq\text{-}ProcID\text{-}Offset2$

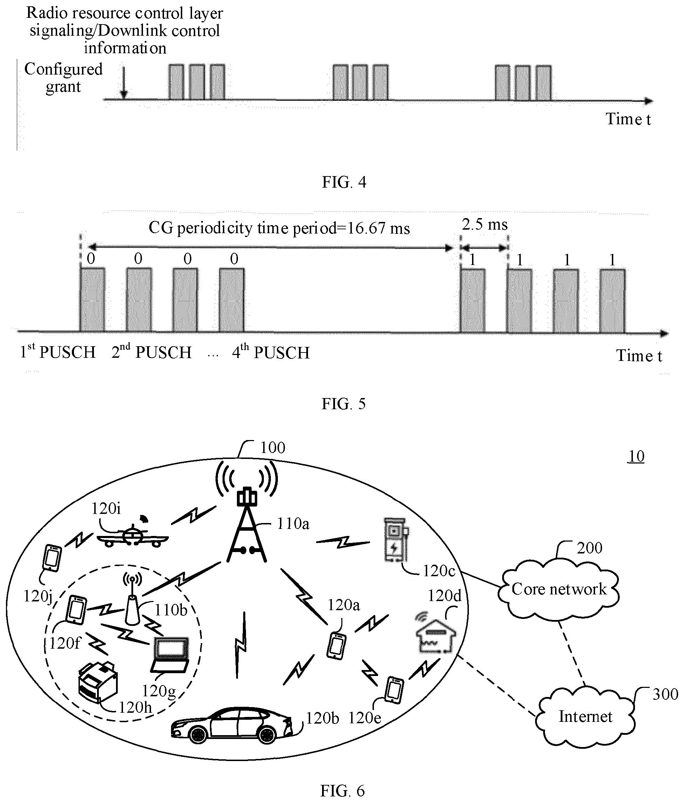

As shown in FIG. 4, generally, on a licensed frequency band, only one PUSCH transmission resource can be configured in one CG periodicity time period, that is, only one transport block (transport block, TB) can be transmitted. For an XR service that has a large data amount and dynamically changes, if one PUSCH transmission resource is configured in one CG periodicity time period, data transmission may fail to be completed.

Table 1

| Field (field) | Bitwidth (bitwidth) |
|---|---|
| HARQ process number (HARQ process number) | 4 |
| Redundancy version (redundancy version) | 2 |
| Current retransmitted data/new data indicator (new data indicator) | 1 |
| Channel occupancy time sharing information (channel occupancy time (COT) sharing information) | 0, 1, or $\lceil \log_2 C \rceil$ |

To resolve the foregoing problem, a plurality of PUSCH transmission occasions may be configured in one CG periodicity time period. This feature is supported on an NR unlicensed frequency band, and the terminal device may perform initial transmission or retransmission on a CG PUSCH. In this case, the terminal device determines HARQ-related information, and reports the HARQ-related information to the network device by using CG uplink control information (uplink control information, UCI), for example, reports content in the CG-UCI shown in Table 1. However, this feature is not supported on an NR licensed frequency band. On a licensed frequency band, when a plurality of PUSCHs are configured in one CG periodicity time period, how to determine a HARQ process ID is a problem. If determining is performed based on a method for a licensed frequency band, HARQ process IDs of adjacent PUSCHs in one periodicity time period may be the same. This is not conducive to scheduling retransmission by the network device, and increases processing difficulty for the network device. Specifically, as shown in FIG. 5, it is assumed that *nrofHARQ-Processes* = 4, *periodicity* = 16.67 ms, and *harq-ProcID-Offset2* = 0, and HARQ process IDs of different PUSCHs meet the following:

$$1^{st}\ PUSCH\ HARQ\ Process\ ID = [floor(0/16.67)]\ modulo\ 4 = 0$$

$$2^{nd}\ PUSCH\ HARQ\ Process\ ID = [floor(2.5/16.67)]\ modulo\ 4 = 0$$

$$3^{rd}\ PUSCH\ HARQ\ Process\ ID = [floor(5/16.67)]\ modulo\ 4 = 0$$

$$4^{th}\ PUSCH\ HARQ\ Process\ ID = [floor(7.5/16.67)]\ modulo\ 4 = 0$$

In this case, HARQ process IDs of four PUSCHs in one CG periodicity time period are all 0. After uplink data transmission of $1^{st}$ *PUSCH* and $2^{nd}$ *PUSCH* is completed, a buffer corresponding to *HARQ Process ID* = 0 stores uplink data of $2^{nd}$ *PUSCH.* If the network device finds that an error occurs in uplink data transmission of $1^{st}$ *PUSCH* in this case, the network device invokes data in the buffer of *HARQ Process ID* = 0 corresponding to $1^{st}$ *PUSCH* to perform retransmission. Apparently, retransmitted data in this case is the uplink data of $2^{nd}$ *PUSCH,* resulting in a retransmission error. The network device cannot accurately determine, based on the HARQ process ID, data that needs to be retransmitted. Consequently, this is not conducive to scheduling retransmission by the network device, and increases processing difficulty for the network device.

In view of this, embodiments of this application provide a data transmission method, to complete, in a configured grant, uplink transmission of service data that has a large data amount and dynamically changes. Embodiments of this application further provide a corresponding communication apparatus, a computer-readable storage medium, a computer program product, and the like. The data transmission method provided in embodiments of this application may be applied to a communication system. The communication system is configured to transmit, including but not limited to, uplink data of an XR service based on a CG and a HARQ.

FIG. 6 is a diagram of a possible and non-limitative communication system. As shown in FIG. 6, the communication system 10 includes a radio access network (radio access network, RAN) 100 and a core network (core network, CN) 200. The RAN 100 includes at least one RAN node (for example, 110a and 110b in FIG. 6, which are collectively referred to as 110) and at least one terminal (for example, 120a to 120j in FIG. 1, which are collectively referred to as 120). The RAN 100 may also include another RAN node, for example, a wireless relay device and/or a wireless backhaul device (not shown in FIG. 6). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a 3GPP-related cellular system, for example, a 4G or 5G mobile communication system, or a future-oriented evolved system (for example, a 6G mobile communication system). Alternatively, the RAN 100 may be an open radio access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

Alternatively, the RAN node 110 may be sometimes referred to as an access network device, a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 6 may be a helicopter or an uncrewed aerial vehicle, and may be configured as a mobile base station. For the terminal 120j that accesses the RAN 100 by using the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 6 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 6), a micro base station or an indoor base station (for example, 110b in FIG. 6), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may also be implemented by using a software function running on hardware, or may be implemented by using an instantiated virtualization function on a platform (for example, a cloud platform). The RAN node in this application may alternatively be a logical node, a logical module, or software that can implement all or some functions of the RAN node.

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application.

Any one of the CU (or the CU-CP or the CU-UP), the DU, and the RU in this application may be implemented by using a software module, a hardware module, or a combination of a software module and a hardware module.

The terminal may also be referred to as a terminal device, user equipment UE, a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

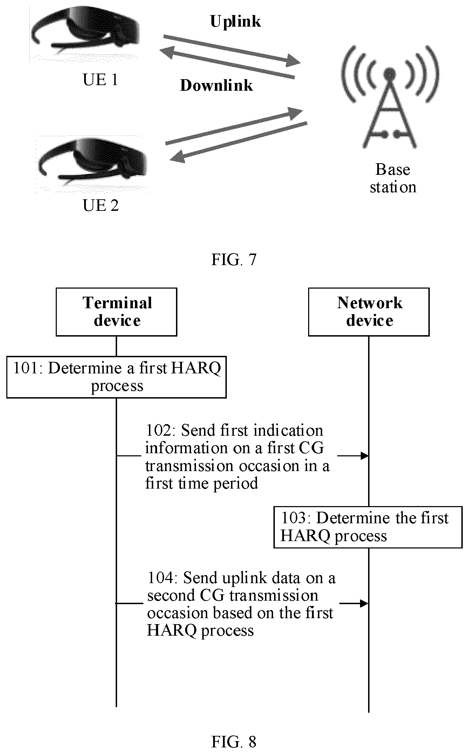

FIG. 7 is a diagram of another possible and non-limitative communication system. As shown in FIG. 7, the communication system includes a terminal device and a network device. The network device is a base station. The terminal device includes UE 1 and UE 2. The base station communicates with the UE 1 and the UE 2. For example, the UE 1 sends uplink data to the base station, and the UE 1 receives downlink data from the base station.

The base station may be any terminal device having a wireless transceiver function, and includes but is not limited to: an evolved NodeB (NodeB or eNB) in long term evolution (Long Term Evolution, LTE), a base station (gNodeB or gNB) in NR, a transmission reception point (transmission reception point, TRP), a base station subsequently evolved in 3GPP, an access node in a Wi-Fi system, a wireless relay node, a wireless backhaul node, and the like. The base station may be specifically a macro base station, a micro base station, a pico base station, a small cell, a relay station, a balloon station, or the like. Alternatively, the terminal device may be a server, a wearable device, a vehicle-mounted device, or the like.

The user equipment (user equipment, UE) may be a mobile phone (mobile phone), a tablet computer (Pad), a computer having a wireless transceiver function, a virtual reality (VR) terminal device, an augmented reality (AR) terminal device, a wireless terminal in industrial control (industrial control), a tactile terminal device, a vehicle-mounted terminal device, a wireless terminal in self-driving, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like.

In this application, "sending information to ... (for example, a terminal)/sending information to ..." may be understood as that a destination end of the information is the terminal, and may include directly or indirectly sending information to the terminal device. "Receiving information from ... (for example, a terminal)/receiving information sent by ..." may be understood as that a source end of the information is the terminal, and may include directly or indirectly receiving information from the terminal. Information may undergo necessary processing between the source for sending the information and the destination, for example, a format change. However, the destination may understand valid information from the source. Similar descriptions in this application may be understood similarly, and details are not described herein again.

The following describes, with reference to the foregoing application scenarios, the data transmission method provided in embodiments of this application.

It may be understood that in an interaction diagram of the method in this application, an example in which a network device and a terminal device are execution bodies of interaction illustration is used to illustrate the method. However, the execution bodies of the interaction illustration are not limited in this application. For example, the network device in the figure may alternatively be a chip, a chip system, or a processor that supports the network device in implementing the method, or may be a logical node, a logical module, or software that can implement all or some functions of the network device; and the terminal device in the figure may alternatively be a chip, a chip system, or a processor that supports the terminal device in implementing the method, or may be a logical node, a logical module, or software that can implement all or some functions of the terminal device.

As shown in FIG. 8, an embodiment of the data transmission method provided in embodiments of this application includes the following steps.

101: A terminal device determines a first HARQ process.

102: The terminal device sends first indication information to a network device on a first CG transmission occasion in a first time period.

The data transmission method provided in this embodiment of this application may be applied to the communication system shown in FIG. 6 or FIG. 7, and may be applied to a plurality of scenarios. In this application, an application scenario in which the data transmission method is applied to a communication system of the network device and the terminal device, and the terminal device sends uplink data to the network device is used as an example for description. The network device determines a HARQ-related parameter of a CG based on service information (a service periodicity and a data amount), for example, determines N PUSCHs in one CG periodicity time period, and configures the parameter for the terminal device. Therefore, for a same PUSCH transmission occasion, the terminal device and the network device need to determine a same HARQ process, and HARQ process IDs corresponding to different HARQ processes in one CG periodicity time period are different from each other.

When the terminal device determines the first HARQ process, because different HARQ processes correspond to different HARQ processes identifiers, that is, HARQ process IDs, the terminal device may first determine an identifier of the first HARQ process. To determine the HARQ process ID, the terminal device first determines the first indication information M of the first HARQ process, where the first indication information indicates a number of CG transmission occasions used or skipped in the first time period. The first indication information may be specifically represented in a plurality of forms. The following separately describes the forms.

(1) The first indication information is M1.

As shown in Table 2, M1 represents a number of CG PUSCHs that need to be used in a current periodicity time period, and may be determined based on a frame size of the current periodicity time period or a data amount in a current buffer and an amount of data that can be carried by the CG PUSCH. For example, if four PUSCHs are configured in the current CG periodicity time period and two PUSCHs need to be used, M1=2. UCI may be in a newly defined UCI format, or a field in CG-UCI may be reused, or a new field may be added to the CG-UCI.

Table 2

| Field | Bitwidth |
|---|---|
| M1 | P1 bit (bit) |

P1 may be determined based on a number N of CG PUSCHs configured by the network device for the terminal device in one CG periodicity time period, $P1 = ceil\{log2(N)\}$, and ceil represents rounding down.

(2) The first indication information is M2.

Table 3

| Field | Bitwidth |
|---|---|
| M2 | P2 bit |

As shown in Table 3, M2 represents a number of CG PUSCHs that do not need to be used in a current periodicity time period, and a number of CG PUSCHs that need to be used may be determined based on a frame size of the current periodicity time period or a data amount in a current buffer and an amount of data that can be carried by the CG PUSCH, and then based on a total number of CG PUSCHs in one periodicity time period. For example, if four PUSCHs are configured in the current CG periodicity time period and the last two PUSCHs do not need to be used, M2=2.

In this case, a bitwidth of the first indication information is related to an index i of the first CG transmission occasion, where i may be understood as a number of currently remaining CG PUSCHs in the first time period, and $P2 = ceil\{log2(i)\}$. Optionally, if the first indication information M1 further needs to represent a number of used CG PUSCHs, the bitwidth of M1 may alternatively be P2.

For example, N=4 CG PUSCHs are configured in one CG periodicity time period. Numbers that can be skipped or not used (skip) when sending is performed on a 1st CG PUSCH are {4, 3, 2, 1}, and $P2 = ceil\{log2(4)\} = 2$. Numbers that can be skipped when sending is performed on a 2nd CG PUSCH are {3, 2, 1}, and $P2 = ceil\{log2(3)\} = 2$. Numbers that can be skipped when sending is performed on a 3rd CG PUSCH are {2, 1}, and $P2 = ceil\{log2(2)\} = 1$.

In another possible example, N=4 CG PUSCHs are configured in one CG periodicity time period. Numbers that can be skipped when sending is performed on a 1st CG PUSCH are {3, 2, 1, 0}, and $P2 = ceil\{log2(3)\} = 2$. Numbers that can be skipped when sending is performed on a 2nd CG PUSCH are {2, 1, 0}, and $P2 = ceil\{log2(2)\} = 1$. Numbers that can be skipped when sending is performed on a 3rd CG PUSCH are {1, 0}, and $P2 = ceil\{log2(2)\} = 1$.

(3) The first indication information is M3.

M3 represents a sequence number of a CG PUSCH that starts to be not used in a current periodicity time period. For example, if four PUSCHs are configured in the current CG periodicity time period and a 3rd CG PUSCH starts to be not used, M3=3. Analysis of occupied bits is similar to (1) and (2).

(4) The first indication information is M4.

M4 represents a sequence number of a CG PUSCH, counting from the end, that starts to be not used in a current periodicity time period. For example, if four PUSCHs are configured in the current CG periodicity time period and the last but one CG PUSCH starts to be not used, M4=3. Analysis of occupied bits is similar to (1) and (2).

(5) The first indication information is M5.

As shown in Table 4, M5 represents a bitmap (Bitmap) used for a CG PUSCH in a current periodicity time period. For example, if four PUSCHs are configured in the current CG periodicity time period and the first two CG PUSCHs are used, M5=[1 1 0 0].

Table 4

| Field | Bitwidth |
|-------|----------|
| M5 | P5 bit |

$P5 = N$. When a 1st CG PUSCH is used by default, $P5 = N - 1$.

It should be noted that M1 to M5 may be determined with reference to each other. For example, M1 is determined based on M5. In this embodiment of this application, an example in which the first indication information is M1 is used for description. It should be understood that M1 is information included in the first indication information, and the first indication information may further include other information.

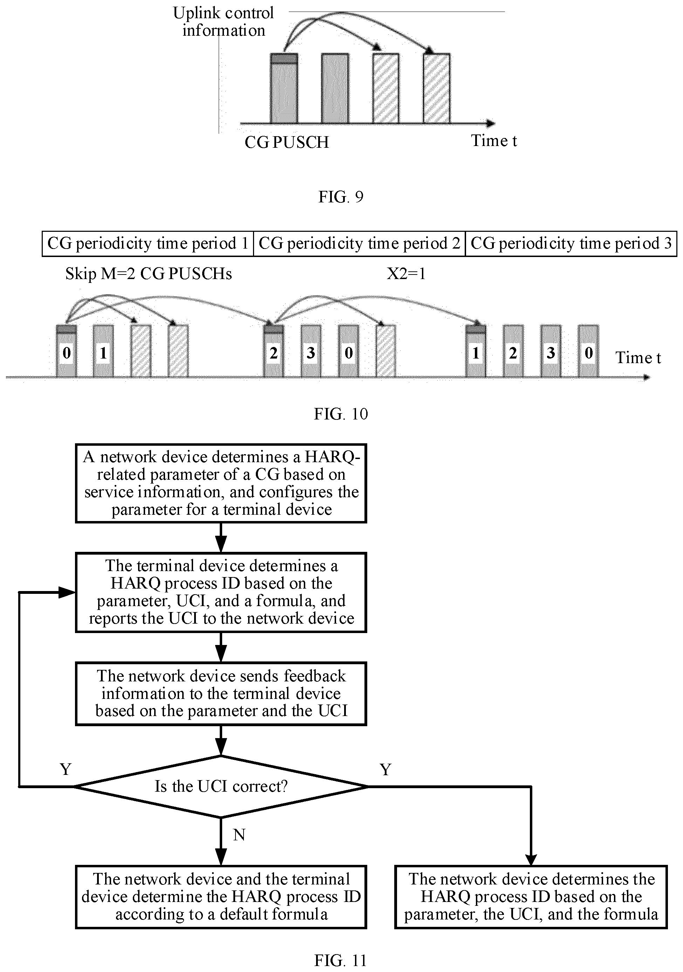

After determining the first indication information, the terminal device may determine the identifier of the first HARQ process based on the first indication information, or may send the first indication information to the network device by reporting the UCI on the first CG PUSCH on the first CG transmission occasion in the first time period, as shown in FIG. 9.

There are a plurality of manners of determining the HARQ process ID. The following separately describes the manners.

1. The identifier of the first HARQ process is related to the number (M) of CG transmission occasions used or skipped in the first time period and an index of a second CG transmission occasion in a second time period.

The first CG transmission occasion is a PUSCH transmission occasion in the first time period (where the first time period may include a plurality of transmission occasions), the second CG transmission occasion is a PUSCH transmission occasion in the second time period (where the second time period may include a plurality of transmission occasions), and the second time period is a time period after the first time period. In this embodiment of this application, the terminal device may determine a HARQ process ID in the first time period, where the HARQ process ID is a HARQ process ID of a PUSCH in the second time period.

In addition, the first time period may be a CG periodicity time period, and the second time period is a CG periodicity time period after the first time period, where duration of one CG periodicity time period is equal to a CG periodicity. The first time period and the second time period may alternatively be time periods in a same CG periodicity time period.

In the first manner of determining the HARQ process ID, the HARQ process ID meets the following:

$HARQ\ Process\ ID = [HARQ\ Process\ ID_{UCI} + M + TB_{index}]\ modulo\ nrofHARQ\text{-}Processes$

$HARQ\ Process\ ID_{UCI}$ represents a HARQ process ID of a PUSCH on which the UCI (which stores the first indication information) is sent, M represents the first indication information reported by using the UCI, and $TB_{index}$ represents the index of the second CG transmission occasion in the second time period, and may be counted from 0.

It should be noted that, when a start offset is considered, the HARQ process ID meets the following:

$HARQ\ Process\ ID = [HARQ\ Process\ ID_{UCI} + M + TB_{index}]\ modulo\ nrofHARQ\text{-}Processes + harq\text{-}ProcID\text{-}Offset2$

In this embodiment of this application, $harq\text{-}ProcID\text{-}Offset2 = 0$ is used as an example for description.

For example, as shown in FIG. 10, the first time period is a CG periodicity time period 1, the second time period is a CG periodicity time period 2, a number M1 of CG PUSCHs that need to be used when reporting is performed by using the UCI on a 1st CG PUSCH in the CG periodicity time period 1 is 2, and $HARQ\ Process\ ID_{UCI} = 0$. In this case, a HARQ process ID of a PUSCH in the CG periodicity time period 2 meets the following:

$$1^{st}\ PUSCH\ HARQ\ Process\ ID = [0 + 2 + 0]\ modulo\ 4 = 2$$

$$2^{nd}\ PUSCH\ HARQ\ Process\ ID = [0 + 2 + 1]\ modulo\ 4 = 3$$

$$3^{rd}\ PUSCH\ HARQ\ Process\ ID = [0 + 2 + 2]\ modulo\ 4 = 0$$

Optionally, the identifier of the first HARQ process is further related to the index (i) of the first CG transmission occasion. In other words, in this embodiment of this application, there is no limitation that the UCI is sent on a 1st PUSCH in the CG periodicity time period. To be specific, the UCI may be sent on the 1st PUSCH, or may be sent on an ith PUSCH, where i is less than or equal to N, and i is configurable. In this case, the HARQ process ID meets the following:

*HARQ Process ID = [HARQ Process ID$_{UCI}$ + M - i + TB$_{index}$] modulo nrofHARQ-Processes*

Optionally, *HARQ Process ID_1st* of a 1st CG PUSCH in the second time period may be further determined based on M indicated by the first indication information in the first time period, and HARQ process IDs of remaining PUSCHs in the second time period are sequentially increased by 1 on the basis of *HARQ Process ID_1st*. In this case, the HARQ process ID meets the following:

$$HARQ\ Process\ ID\_1st = [HARQ\ Process\ ID_{UCI} + M]\ modulo\ nrofHARQ\text{--}Processes$$

Except the HARQ process ID of the 1st PUSCH in the second time period, the remaining HARQ process IDs meet the following:

$$HARQ\ Process\ ID = (HARQ\ Process\ ID\_1st + TB_{index})\ modulo\ nrofHARQ\text{--}Processes$$

2. The identifier of the first HARQ process is not only related to the number (M) of CG transmission occasions used or skipped in the first time period and the index of the second CG transmission occasion in the second time period, but also related to a total number of CG transmission occasions in the first time period.
In the second manner of determining the HARQ process ID, the HARQ process ID meets the following:

*HARQ Process ID = [floor(CURRENT_symbol/periodicity) * nrofTB +offset(M) + TB_index] modulo nrofHARQ-Processes*

*nrofTB* represents the total number of CG transmission occasions in the first time period, and offset represents a total number of TBs used after the CG is activated modulo *nrofHARQ-Processes,* and may be counted from 0.
For example, still referring to FIG. 10, the number M1 of CG PUSCHs that need to be used when reporting is performed by using the UCI on the 1st CG PUSCH in the CG periodicity time period 1 is 2, and *offset(M*1) = 0. For the CG PUSCH in the CG periodicity time period 2, *offset(M*1) = 2 *modulo* 4 = 2. For a CG PUSCH in a CG periodicity time period 3, *offset(M*1) = (2 + 3) *modulo* 4 = 1. In this case, a HARQ process ID of a PUSCH in the CG periodicity time period 2 meets the following:

$$1^{st}\ PUSCH\ HARQ\ Process\ ID = [floor(16.67/16.67) * 4 + 2 + 0]\ modulo\ 4 = 2$$

$$2^{nd}\ PUSCH\ HARQ\ Process\ ID = [floor(16.67/16.67) * 4 + 2 + 1]\ modulo\ 4 = 3$$

$$3^{rd}\ PUSCH\ HARQ\ Process\ ID = [floor(16.67/16.67) * 4 + 2 + 2]\ modulo\ 4 = 0$$

In addition, the second time period may alternatively be the CG periodicity time period 3, and a HARQ process ID of a PUSCH in the CG periodicity time period 3 meets the following:

$$1^{st}\ PUSCH\ HARQ\ Process\ ID = [floor(33.33/16.67) * 4 + 1 + 0]\ modulo\ 4 = 1$$

$$2^{nd}\ PUSCH\ HARQ\ Process\ ID = [floor(33.33/16.67) * 4 + 1 + 1]\ modulo\ 4 = 2$$

$$3^{rd}\ PUSCH\ HARQ\ Process\ ID = [floor(33.33/16.67) * 4 + 1 + 2]\ modulo\ 4 = 3$$

In this case, the network device and the terminal device need to store only a value of offset(M).
It should be understood that, in the foregoing two manners of determining the HARQ process ID, if no UCI is sent in the first time period, determining is performed based on no CG PUSCH being skipped in the first time period, that is, M1=N, and M2=0.

Optionally, *HARQ Process ID_1st* of a 1st CG PUSCH in the second time period may be further determined based on M indicated by the first indication information in the first time period, and HARQ process IDs of remaining PUSCHs in the second time period are sequentially increased by 1 on the basis of *HARQ Process ID_1st*. In this case, the HARQ process ID meets the following:

*HARQ Process ID_1st = [floor(CURRENT_symbol/periodicity) * nrofTB +offset(M)] modulo nrofHARQ-Processes*

Except the HARQ process ID of the 1st PUSCH in the second time period, the remaining HARQ process IDs meet the following:

$$HARQ\ Process\ ID = (HARQ\ Process\ ID\_1st + TB_{index})\ modulo\ nrofHARQ-Processes$$

Optionally, as shown in FIG. 11, to resolve a problem that a HARQ process ID determined by the terminal device is not synchronized with a HARQ process ID determined by the network device because transmission of the UCI or a PUSCH reused for the UCI is not completed, after receiving the UCI sent by the terminal device, the network device feeds back 1 bit to represent whether the reception is correct. For example, DFI signaling of an unlicensed frequency band (extended to a licensed frequency band) may be reused, or a newly defined DCI format (format) may be used. If information fed back by the network device is (initial transmission is correct or retransmission is correct), the terminal device and the network device perform determining according to the foregoing HARQ process ID method. If transmission is incorrect in the current periodicity time period, the terminal device and the network device perform determining according to a default method. In a possible manner, the terminal device and the network device consider that no CG PUSCH is skipped. In other words, the number of CG transmission occasions used in the first time period is equal to the total number of CG transmission occasions in the first time period, or the number of CG transmission occasions skipped in the first time period is equal to zero. The first determining manner is used as an example. In the default method, the HARQ process ID meets the following:

*HARQ Process ID = [HARQ Process ID_{UCI} + N + TB_{index}] modulo nrofHARQ-Processes*

Optionally, if the UCI is sent on a plurality of CG PUSCHs in one CG periodicity time period, when determining HARQ process IDs of PUSCHs in one CG periodicity time period, the terminal device and the network device may determine the HARQ process IDs based on latest UCI. If feedback from the network device exists, the HARQ process IDs are determined based on the latest UCI fed back by the network device.
103: The network device determines the first HARQ process.
104: The terminal device sends the uplink data to the network device on the second CG transmission occasion based on the first HARQ process.
After receiving the first indication information sent by the terminal device on the first CG transmission occasion in the first time period, the network device may determine the first HARQ process by using the foregoing same method. In this case, if HARQ process IDs corresponding to a same CG PUSCH transmission occasion that are determined by the terminal device and the network device are the same, corresponding HARQ processes are also the same, and HARQ process IDs corresponding to different HARQ processes in one CG periodicity time period are different from each other. In this case, the terminal device may send the uplink data to the network device on the second CG transmission occasion based on the first HARQ process.
Specifically, the terminal device sends the uplink data to the network device on the second CG transmission occasion, and the identifier of the corresponding first HARQ process is stored in HARQ information/a HARQ parameter. When retransmission is performed incorrectly, the buffer stores data of different PUSCHs in the current CG periodicity time period. When the network device invokes the HARQ process ID, a retransmission error does not occur. Therefore, a plurality of PUSCH transmission occasions can also be configured on the licensed frequency band, and this is applicable to uplink transmission of service data that has a large data amount and dynamically changes.
In addition, the HARQ process ID of the PUSCH is cyclically used based on an actually used PUSCH, so that a resource that is not used by the terminal device can be scheduled to another user in a timely manner, and resource utilization can be increased. This further helps maximize a use interval of a same HARQ ID, and facilitates scheduling of the network device.
It should be understood that an execution sequence of step 101 and step 102 is not limited. Step 102 may be performed before step 101, or step 101 may be performed before step 102, or step 101 and step 102 may be performed simultaneously. It may be understood that, when N may be selected as the value of the offset, in other words, when the terminal device does not know, at a moment of sending the first indication information, whether the current first indication information is correctly transmitted, step 102 is first performed, and then step 101 is performed.

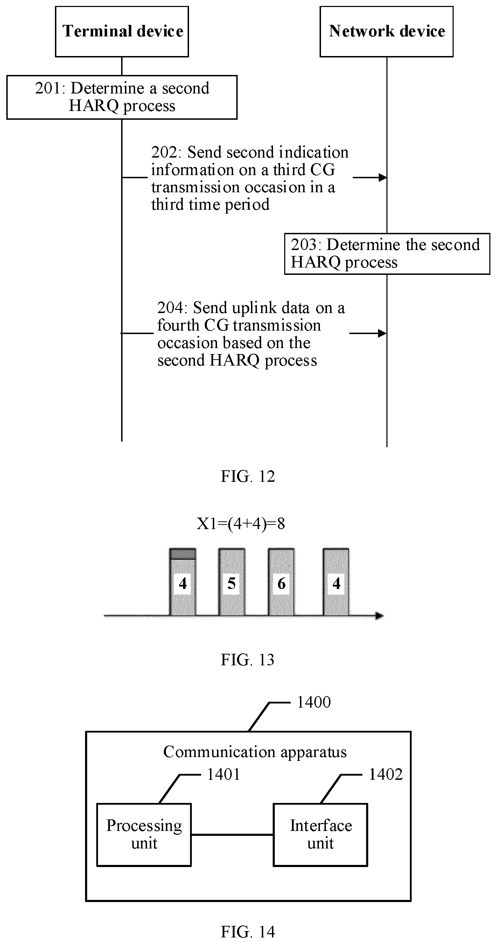

As shown in FIG. 12, another embodiment of the data transmission method provided in embodiments of this application includes the following steps.

201: A terminal device determines a second HARQ process.

202: The terminal device sends second indication information to a network device on a third CG transmission occasion in a third time period.

First, the terminal device determines the second HARQ process. Because different HARQ processes correspond to different HARQ process identifiers, that is, HARQ process IDs, the terminal device may first determine an identifier of the second HARQ process. To determine a HARQ process ID, the terminal device first determines the second indication information X of the second HARQ process, where the second indication information indicates a HARQ process corresponding to a last CG transmission occasion used in the third time period or a HARQ process corresponding to a 1st available CG transmission occasion in a fourth time period. The second indication information may be specifically represented in a plurality of forms. The following separately describes the forms.

(1) The second indication information is X1.

As shown in Table 5, the second indication information indicates the HARQ process corresponding to the last CG transmission occasion used in the third time period or the HARQ process corresponding to the 1st available CG transmission occasion in the fourth time period. In this case, X1 indicated by the second indication information meets the following:

$$X1 = (HARQ\ Process\ ID\_UCI + M1);$$

or

$$X1 = (HARQ\ Process\ ID\_UCI + M1)\ modulo\ nrof HARQ\text{-}Processes$$

In this embodiment of this application, there is no limitation that UCI is sent on a 1st PUSCH in a CG periodicity time period. In this case, the identifier of the second HARQ process is further related to an index i of the third CG transmission occasion, that is, the UCI is sent on an $i^{th}$ PUSCH, where i is less than or equal to N, and i is configurable. In this case, X1 indicated by the second indication information meets the following:

$$X1 = (HARQ\ Process\ ID\_UCI + M1 - i);$$

or

$$X1 = (HARQ\ Process\ ID\_UCI + M1 - i)\ modulo\ nrof HARQ\text{-}Processes$$

For example, as shown in FIG. 13, *nrofHARQ-Processes* = 3, and *harq-ProcID-Offset2* = 4. In this case, an available *HARQ process ID* = {4, 5, 6}, and *X1* = (4 + 4) = 8.

Table 5

| Field | Bitwidth |
|---|---|
| X1 | 5 or 6 bits |

(2) The second indication information is X2.

As shown in Table 6, the second indication information indicates that an identifier of the HARQ process corresponding to the last CG transmission occasion used in the third time period is allocated to an index in a HARQ set of the CG periodicity time period, or an identifier of the HARQ process corresponding to the 1st available CG transmission occasion in the fourth time period is allocated to the index in the HARQ set of the CG periodicity time period.

In this case, X2 indicated by the second indication information meets the following:

$$X2 = (HARQ\ Process\ ID\_UCI - harq\text{-}ProcID\text{-}Offset2 + M1)$$

Table 6

| Field | Bitwidth |
|-------|----------|
| X2 | $\lceil \log_2 nrofHARQ-Processes \rceil + P$ bits |

For example, *nrofHARQ-Processes* = 3, and *harq-ProcID-Offset*2 = 4. In this case, an available *HARQ process ID* = {4, 5, 6}, and *X2* = (4- 4 + 4) = 4.

The bitwidth of X2 is greater than or equal to $\log_2$ *nrofHARQ - Processes,* and P is a protection bitwidth. For example, information corresponding to P bits may additionally indicate a number of PUSCH transmission occasions used in a current CG periodicity time period.

After determining the second indication information, the terminal device may determine the identifier of the second HARQ process based on the second indication information, or may send the second indication information to the network device by reporting the UCI on the third CG transmission occasion in the third time period.

There are a plurality of manners of determining the HARQ process ID. The following separately describes the manners.

1. The identifier of the second HARQ process is related to the identifier of the HARQ process corresponding to the last CG transmission occasion used in the third time period or the identifier of the HARQ process corresponding to the 1st available CG transmission occasion in the fourth time period, and an index of a fourth CG transmission occasion in the fourth time period.

The third CG transmission occasion is a PUSCH transmission occasion in the third time period (where the third time period may include a plurality of transmission occasions), the fourth CG transmission occasion is a PUSCH transmission occasion in the fourth time period (where the fourth time period may include a plurality of transmission occasions), and the fourth time period is a time period after the third time period. In this embodiment of this application, the terminal device may determine a HARQ process ID in the third time period, where the HARQ process ID is a HARQ process ID of a PUSCH in the fourth time period.

In addition, the third time period may be a CG periodicity time period, and the fourth time period is a CG periodicity time period after the third time period, where duration of one CG periodicity time period is equal to a CG periodicity. The third time period and the fourth time period may alternatively be time periods in a same CG periodicity time period.

In the first manner of determining the HARQ process ID, the HARQ process ID meets the following:

*HARQ Process ID = (X1 + TBindex) modulo nrofHARQ-Processes +harq-ProcID- Offset2*

For example, still referring to FIG. 10, the third time period is the CG periodicity time period 1, the fourth time period is the CG periodicity time period 2, and a number X1 of CG PUSCHs that need to be used when reporting is performed by using the UCI on the 1st CG PUSCH in the CG periodicity time period 1 is *HARQ Process ID_UCI + M*1 = 0 + 2 = 2 . Other parameters are the same as those in the first manner of determining the HARQ process ID in the data transmission method shown in FIG. 8. In this case, the HARQ process ID of the PUSCH in the CG periodicity time period 2 meets the following:

$$1^{st}\ PUSCH\ HARQ\ Process\ ID = [2+0]\ modulo\ 4 = 2$$

$$2^{nd}\ PUSCH\ HARQ\ Process\ ID = [2+1]\ modulo\ 4 = 3$$

$$3^{rd}\ PUSCH\ HARQ\ Process\ ID = [2+2]\ modulo\ 4 = 0$$

It should be noted that the network device may determine a value of M in the current CG periodicity time period based on *HARQ Process ID_UCI* and X1.

Optionally, *HARQ Process ID_*1*st* of a 1st CG PUSCH in the fourth time period may be further determined based on X1 indicated by the second indication information in the third time period, and HARQ process IDs of remaining PUSCHs in the fourth time period are sequentially increased by 1 on the basis of *HARQ Process ID_*1*st.* In this case, the HARQ process ID meets the following:

$$HARQ\ Process\ ID\_1st = X1\ modulo\ nrofHARQ\text{-}Processes + harq\text{-}ProcID\text{-}Offset2$$

Except the HARQ process ID of the 1st PUSCH in the fourth time period, the remaining HARQ process IDs meet the following:

$$HARQ\ Process\ ID = (HARQ\ Process\ ID\_1st + TB_{index})\ modulo\ nrofHARQ\text{-}Processes$$

2. The identifier of the second HARQ process is not only related to the identifier of the HARQ process corresponding to the last CG transmission occasion used in the third time period or the identifier of the HARQ process corresponding to the 1st available CG transmission occasion in the fourth time period, and the index of the fourth CG transmission occasion in the fourth time period, but also related to a total number of CG transmission occasions in the third time period.

In the second manner of determining the HARQ process ID, the HARQ process ID meets the following:

HARQ Process ID = [floor(CURRENT_symbol/periodicity) * nrofTBs +TBindex + X2] modulo nrofHARQ-Processes

For example, still referring to FIG. 10, $X2 = (0 - 0 + 2) = 2$ when reporting is performed by using the UCI on the 1st CG PUSCH in the CG periodicity time period 1. Other parameters are the same as those in the first manner of determining the HARQ process ID in the data transmission method shown in FIG. 8. In this case, the HARQ process ID of the PUSCH in the CG periodicity time period 2 meets the following:

$$1^{st}\ PUSCH\ HARQ\ Process\ ID = [floor(16.67/16.67) * 4 + 2 + 0]\ modulo\ 4 = 2$$

$$2^{nd}\ PUSCH\ HARQ\ Process\ ID = [floor(16.67/16.67) * 4 + 2 + 1]\ modulo\ 4 = 3$$

$$3^{rd}\ PUSCH\ HARQ\ Process\ ID = [floor(16.67/16.67) * 4 + 2 + 2]\ modulo\ 4 = 0$$

In addition, the second time period may alternatively be a CG periodicity time period 3, $X2 = (2 - 0 + 3) = 5$ when reporting is performed by using the UCI on a 1st CG PUSCH in the CG periodicity time period 2, and a HARQ process ID of a PUSCH in the CG periodicity time period 3 meets the following:

$$1^{st}\ PUSCH\ HARQ\ Process\ ID = [floor(33.33/16.67) * 4 + 5 + 0]\ modulo\ 4 = 1$$

$$2^{nd}\ PUSCH\ HARQ\ Process\ ID = [floor(33.33/16.67) * 4 + 5 + 1]\ modulo\ 4 = 2$$

$$3^{rd}\ PUSCH\ HARQ\ Process\ ID = [floor(33.33/16.67) * 4 + 5 + 2]\ modulo\ 4 = 3$$

Optionally, *HARQ Process ID_1st* of a 1st CG PUSCH in the fourth time period may be further determined based on X2 indicated by the second indication information in the third time period, and HARQ process IDs of remaining PUSCHs in the fourth time period are sequentially increased by 1 on the basis of *HARQ Process ID_1st*. In this case, the HARQ process ID meets the following:

HARQ Process ID_1st = [floor(CURRENT_symbol/periodicity) * nrofTBs +X2] modulo nrofHARQ-Processes

Except the HARQ process ID of the 1st PUSCH in the fourth time period, the remaining HARQ process IDs meet the following:

$$HARQ\ Process\ ID = (HARQ\ Process\ ID\_1st + TB_{index})\ modulo\ nrofHARQ\text{-}Processes$$

203: The network device determines the second HARQ process.

204: The terminal device sends uplink data to the network device on the fourth CG transmission occasion based on the second HARQ process.

After receiving the second indication information sent by the terminal device on the third CG transmission occasion in the third time period, the network device may determine the second HARQ process by using the foregoing same method. In this case, if HARQ process IDs corresponding to a same CG PUSCH transmission occasion that are determined by the terminal device and the network device are the same, corresponding HARQ processes are also the same, and HARQ process IDs corresponding to different HARQ processes in one CG periodicity time period are different from each other. In this case, the terminal device may send the uplink data to the network device on the fourth CG transmission occasion based on the second HARQ process.

It should be understood that, in embodiments of this application, the data transmission method provided in FIG. 8 and the data transmission method provided in FIG. 12 have same beneficial effects. For some specific descriptions and explanations, refer to each other. Details are not described again in embodiments of this application.

Optionally, in the data transmission method shown in FIG. 8, the first indication information may further indicate a HARQ process corresponding to a last CG transmission occasion used in the first time period or a HARQ process corresponding to a 1st available CG transmission occasion in the second time period. Alternatively, in the data transmission method shown in FIG. 12, the second indication information further indicates a number of CG transmission occasions used or skipped in the third time period. In this case, optionally, when a transmission error occurs, the terminal device and the network device perform determining according to a default method. The terminal device and the network device consider that no CG PUSCH is skipped. In other words, the number of CG transmission occasions used in the third time period is equal to the total number of CG transmission occasions in the third time period, or the number of CG transmission occasions skipped in the third time period is equal to zero. In other words, the two data transmission methods provided in embodiments of this application may be combined or used at the same time. This is not limited in embodiments of this application.

It should be understood that because *HARQ Process ID_UCI* needs to be determined in the second indication information, the data transmission method indicated in step 101 to step 104 and the data transmission method indicated in step 201 to step 204 may be combined or used at the same time. For example, the terminal device determines both the first indication information and the second indication information, and reports the first indication information and the second indication information to the network device. The network device and the terminal device separately determine the HARQ process based on the first indication information and the second indication information. In the foregoing case and when the data transmission method indicated in step 201 to step 204 is independently used, the step of determining the HARQ process is first performed, and then the indication information is sent.

It should be understood that the CG PUSCH in embodiments of this application indicates a transmission occasion configured in the CG periodicity time period, and may be referred to as a PUSCH for short. For example, a HARQ process ID of the PUSCH may also be referred to as a HARQ process ID of the CG PUSCH.

It should be understood that, in the parameters in embodiments of this application, for example, *nrofHARQ-Processes* and *harq-ProcID-Offset2*, the symbol "-" represents a hyphen instead of a minus sign.

The foregoing describes the data transmission methods provided in embodiments of this application. The following describes related devices provided in embodiments of this application with reference to the accompanying drawings.

As shown in FIG. 14, an embodiment of a communication apparatus 1400 provided in embodiments of this application includes:

a processing unit 1401, configured to determine a first hybrid automatic repeat request HARQ process, where an identifier of the first HARQ process is related to a number of configured grant CG transmission occasions used or skipped in a first time period and an index of a second CG transmission occasion in a second time period; and the processing unit 1401 may perform step 101 in the foregoing method embodiment; and

an interface unit 1402, configured to send first indication information on a first CG transmission occasion in the first time period, where the first indication information indicates the number of CG transmission occasions used or skipped in the first time period; and the interface unit 1402 may perform step 102 in the foregoing method embodiment.

The interface unit 1402 is further configured to send uplink data on the second CG transmission occasion based on the first HARQ process. The interface unit 1402 may further perform step 104 in the foregoing method embodiment.

Optionally, the identifier of the first HARQ process is further related to a total number of CG transmission occasions in the first time period.

Optionally, the identifier of the first HARQ process is further related to an index of the first CG transmission occasion.

Optionally, the number of CG transmission occasions used in the first time period is equal to the total number of CG transmission occasions in the first time period, or the number of CG transmission occasions skipped in the first time period is equal to zero.

Optionally, a bitwidth of the first indication information is related to the index of the first CG transmission occasion.

Optionally, the first indication information further indicates a HARQ process corresponding to a last CG transmission occasion used in the first time period or a HARQ process corresponding to a 1st available CG transmission occasion in the second time period.

For understanding of the communication apparatus 1400 provided in this embodiment of this application, refer to corresponding content in the data transmission method embodiment shown in FIG. 8. The communication apparatus 1400 may be the terminal in FIG. 6 or the terminal device in FIG. 7. Details are not described herein again.

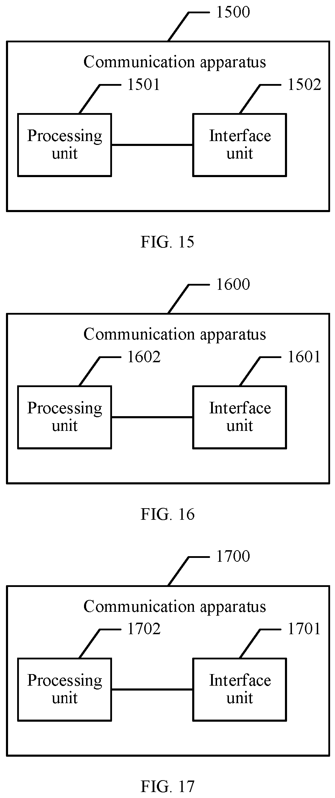

As shown in FIG. 15, an embodiment of a communication apparatus 1500 provided in embodiments of this application includes:

a processing unit 1501, configured to determine a second HARQ process, where an identifier of the second HARQ process is related to an identifier of a HARQ process corresponding to a last CG transmission occasion used in a third time period or an identifier of a HARQ process corresponding to a 1st available CG transmission occasion in a fourth time period, and an index of a fourth CG transmission occasion in the fourth time period; and the processing unit 1501 may perform step 201 in the foregoing method embodiment; and

an interface unit 1502, configured to send second indication information on a third CG transmission occasion in the third time period, where the second indication information indicates the HARQ process corresponding to the last CG transmission occasion used in the third time period or the HARQ process corresponding to the 1st available CG transmission occasion in the fourth time period; and the interface unit 1502 may perform step 202 in the foregoing method embodiment.

The interface unit 1502 is further configured to send uplink data on the fourth CG transmission occasion based on the second HARQ process. The interface unit 1502 may further perform step 204 in the foregoing method embodiment.

Optionally, the identifier of the second HARQ process is further related to a total number of CG transmission occasions in the third time period.

Optionally, the identifier of the second HARQ process is further related to an index of the third CG transmission occasion.

Optionally, the second indication information further indicates a number of CG transmission occasions used or skipped in the third time period.

Optionally, the number of CG transmission occasions used in the third time period is equal to the total number of CG transmission occasions in the third time period, or the number of CG transmission occasions skipped in the third time period is equal to zero.

The communication apparatus 1500 provided in this embodiment of this application may be coupled to the communication apparatus 1400 provided in FIG. 14 as an apparatus. The communication apparatus 1500 may be the RAN node in FIG. 6 or the network device in FIG. 7.

For understanding of the communication apparatus 1500 provided in this embodiment of this application, refer to corresponding content in the data transmission method embodiment shown in FIG. 12. Details are not described herein again.

As shown in FIG. 16, an embodiment of a communication apparatus 1600 provided in embodiments of this application includes:

an interface unit 1601, configured to receive first indication information on a first CG transmission occasion in a first time period, where the first indication information indicates a number of CG transmission occasions used or skipped in the first time period; and the interface unit 1601 may perform step 102 in the foregoing method embodiment; and

a processing unit 1602, configured to determine a first HARQ process, where an identifier of the first HARQ process is related to the number of configured grant CG transmission occasions used or skipped in the first time period and an index of a second CG transmission occasion in a second time period; and the processing unit 1602 may perform step 103 in the foregoing method embodiment.

The interface unit 1601 is further configured to receive uplink data on the second CG transmission occasion based on the first HARQ process. The interface unit 1601 may further perform step 104 in the foregoing method embodiment.

Optionally, the identifier of the first HARQ process is further related to a total number of CG transmission occasions in the first time period.

Optionally, the identifier of the first HARQ process is further related to an index of the first CG transmission occasion.

Optionally, the number of CG transmission occasions used in the first time period is equal to the total number of CG transmission occasions in the first time period, or the number of CG transmission occasions skipped in the first time period is equal to zero.

Optionally, a bitwidth of the first indication information is related to the index of the first CG transmission occasion.

Optionally, the first indication information further indicates a HARQ process corresponding to a last CG transmission occasion used in the first time period or a HARQ process corresponding to a 1st available CG transmission occasion in the second time period.

The communication apparatus 1600 provided in this embodiment of this application may form a communication system with the communication apparatus 1400 provided in FIG. 14. The communication apparatus 1600 may be the terminal in FIG. 6 or the terminal device in FIG. 7.

For understanding of the communication apparatus 1600 provided in this embodiment of this application, refer to corresponding content in the data transmission method embodiment shown in FIG. 8. Details are not described herein again.

As shown in FIG. 17, an embodiment of a communication apparatus 1700 provided in embodiments of this application includes:

an interface unit 1701, configured to receive second indication information on a third CG transmission occasion in a third time period, where the second indication information indicates a HARQ process corresponding to a last CG transmission occasion used in the third time period or a HARQ process corresponding to a 1st available CG transmission occasion in a fourth time period; and the interface unit 1701 may perform step 202 in the foregoing method embodiment; and

a processing unit 1702, configured to determine a second HARQ process, where an identifier of the second HARQ process is related to an identifier of the HARQ process corresponding to the last CG transmission occasion used in the third time period or an identifier of the HARQ process corresponding to the 1st available CG transmission occasion in the fourth time period, and an index of a fourth CG transmission occasion in the fourth time period; and the processing unit 1702 may perform step 203 in the foregoing method embodiment.

The interface unit 1701 is further configured to receive uplink data on the fourth CG transmission occasion based on the second HARQ process. The interface unit 1701 may further perform step 204 in the foregoing method embodiment.

Optionally, the identifier of the second HARQ process is further related to a total number of CG transmission occasions in the third time period.

Optionally, the identifier of the second HARQ process is further related to an index of the third CG transmission occasion.

Optionally, the second indication information further indicates a number of CG transmission occasions used or skipped in the third time period.

Optionally, the number of CG transmission occasions used in the third time period is equal to the total number of CG transmission occasions in the third time period, or the number of CG transmission occasions skipped in the third time period is equal to zero.

The communication apparatus 1700 provided in this embodiment of this application may form a communication system with the communication apparatus 1500 provided in FIG. 15, or may be coupled to the communication apparatus 1600 provided in FIG. 16 as an apparatus. The communication apparatus 1700 may be the RAN node in FIG. 6 or the network device in FIG. 7.

For understanding of the communication apparatus 1700 provided in this embodiment of this application, refer to corresponding content in the data transmission method embodiment shown in FIG. 12. Details are not described herein again.

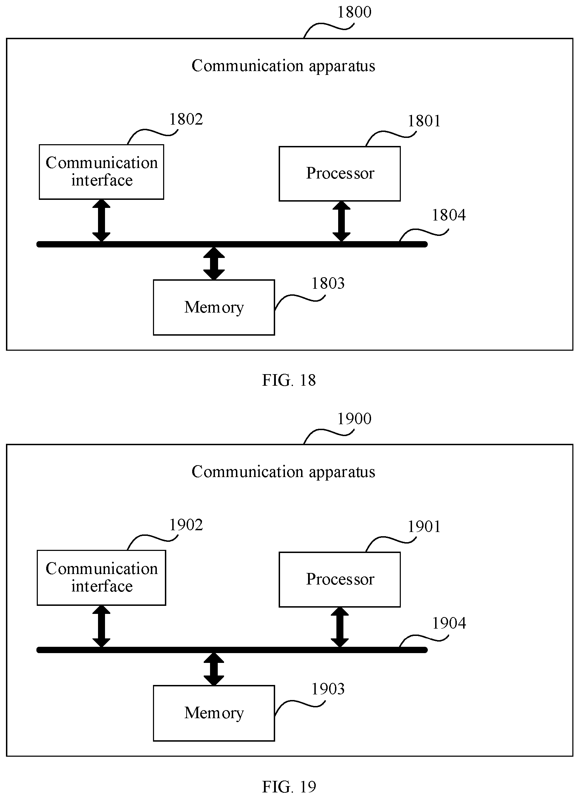

FIG. 18 is a diagram of a possible logical structure of a communication apparatus 1800 according to an embodiment of this application. The communication apparatus may be the terminal in FIG. 6 or the terminal device in FIG. 7. The communication apparatus 1800 includes a processor 1801, a communication interface 1802, a memory 1803, and a bus 1804. The processor 1801 may include a central processing unit (central processing unit, CPU), or at least one of a CPU, a graphics processing unit (graphics processing unit, GPU), an embedded neural-network processing unit (neural-network processing unit, NPU), and another type of processor.

The processor 1801, the communication interface 1802, and the memory 1803 are connected to each other through the bus 1804, the processor 1801 is coupled to the memory 1803, and the memory 1803 is configured to store a program or instructions. In this embodiment of this application, the processor 1801 is configured to control and manage an action of the communication apparatus 1800. For example, the processor 1801 is configured to perform step 101, step 102, and step 104 in FIG. 8, and step 201, step 202, and step 204 in FIG. 12, and/or another process of the technology described in this specification. The communication interface 1802 is configured to support communication of the communication apparatus 1800. The memory 1803 is configured to store program code and data of the communication apparatus 1800.

The processor 1801 may be a central processing unit, a general-purpose processor, a digital signal processor, an application-specific integrated circuit, a field programmable gate array or another programmable logic device, a transistor logic device, a hardware component, or any combination thereof, and may implement or execute various example logical blocks, modules, and circuits described with reference to content disclosed in this application. The processor may alternatively be a combination for implementing a computing function, for example, a combination including one or more microprocessors or a combination of a digital signal processor and a microprocessor. The bus 1804 may be a peripheral component interconnect (Peripheral Component Interconnect, PCI) bus or an extended industry standard architecture (Extended Industry Standard Architecture, EISA) bus, or the like. The bus may be classified into an address bus, a data bus, a control bus, and the like. For ease of representation, only one bold line is used for representation in FIG. 18, but this does not mean that there is only one bus or only one type of bus.

FIG. 19 is a diagram of a possible logical structure of a communication apparatus 1900 according to an embodiment of this application. The communication apparatus may be the RAN node in FIG. 6 or the network device in FIG. 7. The communication apparatus 1900 includes a processor 1901, a communication interface 1902, a memory 1903, and a bus 1904. The processor 1901 may include a CPU, or at least one of a CPU, a GPU, an NPU, and another type of processor.

The processor 1901, the communication interface 1902, and the memory 1903 are connected to each other through the bus 1904, the processor 1901 is coupled to the memory 1903, and the memory 1903 is configured to store a program or instructions. In this embodiment of this application, the processor 1901 is configured to control and manage an action of the communication apparatus 1900. For example, the processor 1901 is configured to perform step 102, step 103, and step 104 in FIG. 8, and step 202, step 203, and step 204 in FIG. 12, and/or another process of the technology described in this specification. The communication interface 1902 is configured to support communication of the communication apparatus 1900. The memory 1903 is configured to store program code and data of the communication apparatus 1900.

The processor 1901 may be a central processing unit, a general-purpose processor, a digital signal processor, an application-specific integrated circuit, a field programmable gate array or another programmable logic device, a transistor logic device, a hardware component, or any combination thereof, and may implement or execute various example logical blocks, modules, and circuits described with reference to content disclosed in this application. The processor may alternatively be a combination for implementing a computing function, for example, a combination including one or more microprocessors or a combination of a digital signal processor and a microprocessor. The bus 1904 may be a peripheral component interconnect (Peripheral Component Interconnect, PCI) bus or an extended industry standard architecture (Extended Industry Standard Architecture, EISA) bus, or the like. The bus may be classified into an address bus, a data bus, a control bus, and the like. For ease of representation, only one bold line is used for representation in FIG. 19, but this does not mean that there is only one bus or only one type of bus.

In another embodiment of this application, a computer-readable storage medium is further provided. The computer-readable storage medium stores computer-executable instructions. When at least one processor of a device executes the computer-executable instructions, the device performs the data transmission method described in the embodiment in FIG. 8.

In another embodiment of this application, a computer-readable storage medium is further provided. The computer-readable storage medium stores computer-executable instructions. When at least one processor of a device executes the computer-executable instructions, the device performs the data transmission method described in the embodiment in FIG. 12.

In another embodiment of this application, a computer program product is further provided. The computer program product includes computer-executable instructions, and the computer-executable instructions are stored in a computer-readable storage medium. At least one processor of a device may read the computer-executable instructions from the computer-readable storage medium, and the at least one processor executes the computer-executable instructions, so that the device performs the data transmission method described in the embodiment in FIG. 8.

In another embodiment of this application, a computer program product is further provided. The computer program product includes computer-executable instructions, and the computer-executable instructions are stored in a computer-readable storage medium. At least one processor of a device may read the computer-executable instructions from the computer-readable storage medium, and the at least one processor executes the computer-executable instructions, so that the device performs the data transmission method described in the embodiment in FIG. 12.

In another embodiment of this application, a chip system is further provided. The chip system includes at least one processor and an interface. The interface is configured to receive data and/or a signal. The at least one processor is configured to support implementation of the data transmission method described in the embodiment in FIG. 8. In a possible design, the chip system further includes a memory. The memory is configured to store program instructions and data that are necessary for a computer device. The chip system may include a chip, or may include a chip and another discrete component.

In another embodiment of this application, a chip system is further provided. The chip system includes at least one processor and an interface. The interface is configured to receive data and/or a signal. The at least one processor is configured to support implementation of the data transmission method described in the embodiment in FIG. 12. In a possible design, the chip system further includes a memory. The memory is configured to store program instructions and data that are necessary for a computer device. The chip system may include a chip, or may include a chip and another discrete component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In some embodiments provided in this application, it should be understood that the disclosed system, apparatus and method may be implemented in another manner. For example, the apparatus embodiments described above are merely an example. For example, division of the units is merely logical function division. In an actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

Units described as separate parts may or may not be physically separate, and parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (ROM, read-only memory), a random access memory (RAM, random access memory), a magnetic disk, or an optical disc.

**Claims**

1. A data transmission method, comprising:

   determining a first hybrid automatic repeat request HARQ process, wherein an identifier of the first HARQ process is related to a number of configured grant CG transmission occasions used or skipped in a first time period and an index of a second CG transmission occasion in a second time period;
   sending first indication information on a first CG transmission occasion in the first time period, wherein the first indication information indicates the number of CG transmission occasions used or skipped in the first time period; and
   sending uplink data on the second CG transmission occasion based on the first HARQ process.

2. The method according to claim 1, wherein the identifier of the first HARQ process is further related to a total number of CG transmission occasions in the first time period.

3. The method according to claim 1, wherein the identifier of the first HARQ process is further related to an index of the first CG transmission occasion.

4. The method according to any one of claims 1 to 3, wherein the number of CG transmission occasions used in the first time period is equal to the total number of CG transmission occasions in the first time period, or the number of CG transmission occasions skipped in the first time period is equal to zero.

5. The method according to any one of claims 1 to 4, wherein a bitwidth of the first indication information is related to the index of the first CG transmission occasion.

6. The method according to any one of claims 1 to 5, wherein the first indication information further indicates a HARQ process corresponding to a last CG transmission occasion used in the first time period or a HARQ process corresponding to a 1st available CG transmission occasion in the second time period.

7. A data transmission method, comprising:

determining a second HARQ process, wherein an identifier of the second HARQ process is related to an identifier of a HARQ process corresponding to a last CG transmission occasion used in a third time period or an identifier of a HARQ process corresponding to a 1st available CG transmission occasion in a fourth time period, and an index of a fourth CG transmission occasion in the fourth time period;
sending second indication information on a third CG transmission occasion in the third time period, wherein the second indication information indicates the HARQ process corresponding to the last CG transmission occasion used in the third time period or the HARQ process corresponding to the 1st available CG transmission occasion in the fourth time period; and
sending uplink data on the fourth CG transmission occasion based on the second HARQ process.

8. The method according to claim 7, wherein the identifier of the second HARQ process is further related to a total number of CG transmission occasions in the third time period.

9. The method according to claim 7, wherein the identifier of the second HARQ process is further related to an index of the third CG transmission occasion.

10. The method according to any one of claims 7 to 9, wherein the second indication information further indicates a number of CG transmission occasions used or skipped in the third time period.

11. The method according to claim 10, wherein the number of CG transmission occasions used in the third time period is equal to the total number of CG transmission occasions in the third time period, or the number of CG transmission occasions skipped in the third time period is equal to zero.

12. A data transmission method, comprising:

receiving first indication information on a first CG transmission occasion in a first time period, wherein the first indication information indicates a number of CG transmission occasions used or skipped in the first time period;
determining a first HARQ process, wherein an identifier of the first HARQ process is related to the number of configured grant CG transmission occasions used or skipped in the first time period and an index of a second CG transmission occasion in a second time period; and
receiving uplink data on the second CG transmission occasion based on the first HARQ process.

13. The method according to claim 12, wherein the identifier of the first HARQ process is further related to a total number of CG transmission occasions in the first time period.

14. The method according to claim 12, wherein the identifier of the first HARQ process is further related to an index of the first CG transmission occasion.

15. The method according to any one of claims 12 to 14, wherein the number of CG transmission occasions used in the first time period is equal to the total number of CG transmission occasions in the first time period, or the number of CG transmission occasions skipped in the first time period is equal to zero.

16. The method according to any one of claims 12 to 15, wherein a bitwidth of the first indication information is related to the index of the first CG transmission occasion.

17. The method according to any one of claims 12 to 16, wherein the first indication information further indicates a HARQ process corresponding to a last CG transmission occasion used in the first time period or a HARQ process corresponding to a 1st available CG transmission occasion in the second time period.

18. A data transmission method, comprising:

receiving second indication information on a third CG transmission occasion in a third time period, wherein the second indication information indicates a HARQ process corresponding to a last CG transmission occasion used in the third time period or a HARQ process corresponding to a $1^{st}$ available CG transmission occasion in a fourth time period;

determining a second HARQ process, wherein an identifier of the second HARQ process is related to an identifier of the HARQ process corresponding to the last CG transmission occasion used in the third time period or an identifier of the HARQ process corresponding to the $1^{st}$ available CG transmission occasion in the fourth time period, and an index of a fourth CG transmission occasion in the fourth time period; and

receiving uplink data on the fourth CG transmission occasion based on the second HARQ process.

19. The method according to claim 18, wherein the identifier of the second HARQ process is further related to a total number of CG transmission occasions in the third time period.

20. The method according to claim 18, wherein the identifier of the second HARQ process is further related to an index of the third CG transmission occasion.

21. The method according to any one of claims 18 to 20, wherein the second indication information further indicates a number of CG transmission occasions used or skipped in the third time period.

22. The method according to claim 21, wherein the number of CG transmission occasions used in the third time period is equal to the total number of CG transmission occasions in the third time period, or the number of CG transmission occasions skipped in the third time period is equal to zero.

23. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 6 or perform the method according to any one of claims 7 to 11.

24. A communication apparatus, comprising a processor, wherein the processor is coupled to a memory, and the memory is configured to store a program or instructions; and when the program or the instructions are executed by the processor, the apparatus is enabled to perform the method according to any one of claims 12 to 17 or perform the method according to any one of claims 18 to 22.

25. A computer-readable storage medium, wherein the computer-readable storage medium stores a computer program, and when the computer program is executed by a processor, the method according to any one of claims 1 to 22 is implemented.

26. A computer program product, storing one or more computer-executable instructions, wherein when the computer-executable instructions are executed by a processor, the processor performs the method according to any one of claims 1 to 22.

27. A communication apparatus, comprising a unit configured to perform the method according to any one of claims 1 to 6 or claims 7 to 11.

28. A communication apparatus, comprising a unit configured to perform the method according to any one of claims 12 to 17 or claims 18 to 22.

One picture
frame

1/60s
=16.67 ms

FIG. 1

Radio resource control layer
signaling/Downlink control
information

Configured
grant

PUSCH                PUSCH                PUSCH                Time t

FIG. 2

Slot number
in a frame

System frame
number=8

System frame
number=9

System frame
number=10

Number of consecutive
slots per frame

PUSCH

Start symbol index in a slot

Number of consecutive
symbols per slot

FIG. 3

Radio resource control layer
signaling/Downlink control
information

Configured
grant

Time t

FIG. 4

CG periodicity time period=16.67 ms

2.5 ms

0    0    0    0    1    1    1    1

1st PUSCH   2nd PUSCH   ...   4th PUSCH

Time t

FIG. 5

100

10

120i

110a

200

120c

Core network

120d

120j

110b

120a

120f

120g

120h

Internet

300

120b  120e

FIG. 6

**Uplink**

**Downlink**

UE 1

UE 2

Base
station

FIG. 7

Terminal
device

Network
device

101: Determine a first HARQ
process

102: Send first indication
information on a first CG
transmission occasion in a
first time period

103: Determine the first
HARQ process

104: Send uplink data on a
second CG transmission
occasion based on the first
HARQ process

FIG. 8

Uplink control information

CG PUSCH

Time t

FIG. 9

| CG periodicity time period 1 | CG periodicity time period 2 | CG periodicity time period 3 |
|---|---|---|

Skip M=2 CG PUSCHs

X2=1

Time t

FIG. 10

A network device determines a HARQ-related parameter of a CG based on service information, and configures the parameter for a terminal device

The terminal device determines a HARQ process ID based on the parameter, UCI, and a formula, and reports the UCI to the network device

The network device sends feedback information to the terminal device based on the parameter and the UCI

Y          Is the UCI correct?          Y

N

The network device and the terminal device determine the HARQ process ID according to a default formula

The network device determines the HARQ process ID based on the parameter, the UCI, and the formula

FIG. 11

Terminal device | Network device

201: Determine a second HARQ process

202: Send second indication information on a third CG transmission occasion in a third time period

203: Determine the second HARQ process

204: Send uplink data on a fourth CG transmission occasion based on the second HARQ process

FIG. 12

X1=(4+4)=8

4 5 6 4

FIG. 13

1400

Communication apparatus

1401

1402

Processing unit

Interface unit

FIG. 14

1500

Communication apparatus

1501

Processing unit

1502

Interface unit

FIG. 15

1600

Communication apparatus

1602

Processing unit

1601

Interface unit

FIG. 16

1700

Communication apparatus

1702

Processing unit

1701

Interface unit

FIG. 17

1800

Communication apparatus

1802
Communication interface

1801
Processor

1804

1803
Memory

FIG. 18

1900

Communication apparatus

1902
Communication interface

1901
Processor

1904

1903
Memory

FIG. 19

## INTERNATIONAL SEARCH REPORT

| International application No. |
| --- |
| **PCT/CN2023/136978** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, DWPI, 3GPP: 自动重传, 标识, 号码, 配置授权, 传输时机, 传输机会, 索引, 数量, 个数, 使用, 跳过, 多个, HARQ, process, ID, PID, HPID, CG, index, number, amount, quantity, us+, UCI, opportunity, TB, PUSCH

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022205424 A1 (QUALCOMM INC.) 06 October 2022 (2022-10-06) description, paragraphs 0049 and 0095-0100 | 1-28 |
| A | WO 2023010486 A1 (APPLE INC.) 09 February 2023 (2023-02-09) entire document | 1-28 |
| A | CN 114342508 A (HUAWEI TECHNOLOGIES CO., LTD.) 12 April 2022 (2022-04-12) entire document | 1-28 |
| A | CN 114424478 A (QUALCOMM INC.) 29 April 2022 (2022-04-29) entire document | 1-28 |
| A | OPPO. "Discussion on resource allocation and HARQ process id of configured grant" *3GPP TSG-RAN WG2 #112-e, R2-2008800,* 30 November 2020 (2020-11-30), sections 2-3 | 1-28 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 February 2024** | **07 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/136978**

| Patent document cited in search report | | | Publication date (day/month/year) | Patent family member(s) | | | Publication date (day/month/year) |
|---|---|---|---|---|---|---|---|
| WO | 2022205424 | A1 | 06 October 2022 | None | | | |
| WO | 2023010486 | A1 | 09 February 2023 | None | | | |
| CN | 114342508 | A | 12 April 2022 | WO | 2021062833 | A1 | 08 April 2021 |
| | | | | US | 2022217749 | A1 | 07 July 2022 |
| | | | | EP | 4027722 | A1 | 13 July 2022 |
| CN | 114424478 | A | 29 April 2022 | EP | 4035293 | A1 | 03 August 2022 |
| | | | | US | 2021099257 | A1 | 01 April 2021 |
| | | | | WO | 2021062445 | A1 | 01 April 2021 |
| | | | | US | 2023421304 | A1 | 28 December 2023 |
| | | | | IN | 202227007719 | A | 01 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310152005